(19) Europäisches Patentamt
European Patent Office
Office européen des brevets

(11) **EP 2 672 482 A1**

(12) **EUROPEAN PATENT APPLICATION**
published in accordance with Art. 153(4) EPC

(43) Date of publication:
**11.12.2013 Bulletin 2013/50**

(21) Application number: **12742531.2**

(22) Date of filing: **03.02.2012**

(51) Int Cl.:
*G11B 7/24* (2013.01)      *G02B 1/11* (2006.01)
*G11B 7/26* (2006.01)

(86) International application number:
**PCT/JP2012/053033**

(87) International publication number:
**WO 2012/105724 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2011   JP 2011023390**

(71) Applicants:
• **Sony Corporation**
  **Tokyo 108-0075 (JP)**
• **SONY DADC Corporation**
  **Shinagawa-ku**
  **Tokyo**
  **141-0001 (JP)**

(72) Inventors:
• **MINEGISHI, Shinji**
  **Tokyo 108-0075 (JP)**
• **ENDOH, Sohmei**
  **Tokyo 108-0075 (JP)**
• **HAYASHIBE, Kazuya**
  **Tokyo 108-0075 (JP)**

(74) Representative: **Turner, James Arthur**
  **D Young & Co LLP**
  **120 Holborn**
  **London EC1N 2DY (GB)**

(54) **OPTICAL INFORMATION RECORDING MEDIUM AND PRODUCTION METHOD THEREFOR**

(57)    An optical information recording medium has: a substrate; one, two or more information signal layers which is formed on the substrate; and a protective layer which is formed on the one, two or more information signal layers. The surface of the protective layer is a reading surface on which light for recording or playing back an information signal in the information signal layer is radiated, and, in the reading surface, a plurality of subwavelength structures is formed.

## FIG. 20

**Description**

TECHNICAL FIELD

The present invention relates to an optical information recording medium and a method of manufacturing the optical information recording medium. More particularly, the present invention relates to an optical information recording medium which has an antireflection function on a surface.

BACKGROUND ART

Optical disks have advantages of convenience to handle, easiness of mass production and low manufacturing cost, and therefore are widespread as recording media for recording video images and music. Although an optical disk is a recording medium for recording and playing back an information signal by way of radiation and reflection of light by using an optical drive device, (1) a problem of a drive device side and (2) a problem of an optical disk side are conventionally pointed out as described below.

1. Problem of Drive (Player) Optical Pickup Side

A surface reflectivity of an optical resin material such as polycarbonate which is generally used for optical disks is about 5% over the entire visible light. Hence, when a disk is placed on a drive (player), the amount of light emitted from a light source laser (CD (Compact Disc) 780 nm, DVD (Digital Versatile Disc) 650 nm or BD (Blu-ray Disc (registered trademark)) 405 nm) of an optical pickup for reading a disk signal attenuates by about 5% upon incidence on a disk substrate. Further, when transmitting light is reflected on a reflection layer of a signal surface and returns to a pickup side, the amount of light attenuates by about 5% again when the light passes a disk substrate surface. Then, the amount of light in the total amount of the amount of playback signal attenuates by about 10%, and therefore a pickup light source laser requires excessive emission power and has a corresponding load, and therefore causes a negative influence such as short longevity of a laser.

Although a recording laser requires greater power than the playback system in case of a recording disk, the recording laser requires power which is about 5% more excessive than originally required power due to surface reflection and has a corresponding load, and therefore causes a negative influence such as a short longevity of a laser. Further, the amount of reflected light which is a disk playback signal from a disk reflection film surface attenuates by about 5% likewise as the time of incidence when the light is emitted from the disk substrate surface, and therefore signal quality is deteriorated.

Further, although, when an optical disk is placed on a drive (player), an optical pickup first applies a servo focus to a disk signal reflection film surface (from a film closer to a surface in case of a multi-layer film), if the reflectivity of the disk surface is high in this case, there is a problem that this surface is erroneously recognized as the signal reflection film surface, and disk information cannot be read and played back. This problem became obvious after a film of a low reflectivity is adopted for a two-layer structure disk of a DVD-DL specification, the reflectivity of a reflection film close to the surface in 25 GB/layer × 8 layers: 200 G structure which is a future capacity expanded specification of BD described below is also likely to be about 2% or less, and is likely to cause a significant problem.

Further, although an optical pickup for an octo-speed recording/playback technique is studied for BD (see, for example, Non-Patent Document 1), surface reflection of a disk causes loss resulting from high power required for high-speed recording and loss of the amount of playback signal upon high-speed playback which are significant failure.

2. Problem of Optical Disk Side

The reflectivity as the amount of playback signal is clearly defined per standard. For example, under conditions of use of a polarization optical pickup, the reflectivity is, for example, CD: 58% < (780 nm) and 35% < (650 nm), DVD-SL: 45 to 85% and DL 18 to 30% (650 nm), and BD-SL: high reflectivity 35 to 70% and DL (including SL low reflectivity) 12 to 28% (405 nm). To satisfy these reflectivity standards, it is necessary to set a higher original reflectivity in advance and secure the amount of reflected light taking into account that the amount of signal reflected light from a disk reflection film attenuates by about 5% when the light is emitted from the disk substrate surface.

Particularly, in case of two-layer structure disks such as a DVD and a BD, precise film thickness control for keeping the balance of securing the amount of reflected light in a semi-transmission layer close to a substrate surface side and also securing the amount of transmitted light for a reflection layer in the depth side is required, and causes a significant trouble upon manufacturing. Although multi-layer structure disks such as 25 GB/layer:x 8 layer 200 G and 25 GB/layer × 16 layer 400 G for future expansion of capacity of BD are released and actively studied, the reflectivity of each layer in a greater number of layers naturally becomes lower and the amount of signal light also becomes little, and therefore there is a significant problem that the amount of light attenuates by about 5% on a disk surface. This decrease in the amount of signal light causes that a signal is weakened by electric noise in an optical pickup playback signal detector mentioned above and a reading error occurs.

To solve the above problem, a technique of providing an antireflection film on an optical disk surface is proposed (see, for example, Patent Document 1 and Patent Document 2). However, as the density of an optical disk becomes higher in recent years, a better antireflection function is desired.

CITATION LIST

PATENT DOCUMENTS

Patent Document 1: Japanese Patent Application Laid-Open No. 6-28716
Patent Document 2: Japanese Patent Application Laid-Open No. 2003-208733

NON-PATENT DOCUMENT

Non-Patent Document 1: CX-PAL, Semiconductor & Component News, Sony Corporation, October 2007, vol. 74

SUMMARY OF THE INVENTION

PROBLEMS TO BE SOLVED BY THE INVENTION

It is therefore an object of the present invention to provide an optical information recording medium which has a good antireflection function, and a method of manufacturing the optical information recording medium.

SOLUTIONS TO PROBLEMS

To solve the above problem, a first invention is an optical information recording medium which has: a substrate; one, two or more information signal layer which is formed on the substrate; and a protective layer which is formed on the one, two or more information signal layer, and in which the surface of the protective layer is a reading surface on which light for recording or playing back an information signal in the information signal layer is radiated, and, in the reading surface, a plurality of subwavelength structures is formed.

A second invention is an optical information recording medium which has: a first substrate; one, two or more information signal layer which is formed on the first substrate; and a second substrate which is formed on the one, two or more information signal layer, and in which a surface of the second substrate is a reading surface on which light for recording or playing back an information signal in the information signal layer is radiated and, in the reading surface, a plurality of subwavelength structures is formed.

A third invention is an optical information recording medium which has: a substrate; one, two or more information signal layer which is formed on the substrate; and a protective layer which is formed on the one, two or more information signal layer, and in which a surface of the substrate is a reading surface on which light for recording or playing back an information signal in the information signal layer is radiated and, in the reading surface, a plurality of subwavelength structures is formed.

A fourth invention is an optical information recording medium which has: a reading surface on which light for recording or playing back an information signal is radiated, and in which, in the reading surface, a plurality of subwavelength structures is formed.

A fifth invention is a method of manufacturing an optical information recording medium which includes: transferring a shape of a reading surface forming master to a resin material, and forming a substrate or a protective layer on a surface of which a plurality of subwavelength structures is formed, and in which a surface of the substrate or the protective layer is a reading surface on which light for recording or playing back an information signal in the information signal layer is radiated.

In the present invention, the subwavelength structure refers to a structure which is formed to have the dimension shorter than a visible light wavelength region, and, more specifically, refers to a structure in which a bottom surface having a circular or elliptic shape has the substantially fixed diameter or long diameter and short diameter in a range of 150 nm to 480 nm, and has a conical shape or a circular truncated conical shape the top of which is almost planar which has the height in a range of 100 nm to 280 nm.

In the present invention, the subwavelength structures are formed on the reading surface, so that it is possible to reduce reflection of recording light or playback light incident on the reading surface. Consequently, it is possible to reduce loss of recording light or playback light on the reading surface.

EFFECTS OF THE INVENTION

As described above, the present invention has a subwavelength structures formed on a reading surface on which light for recording or playing back an information signal is radiated, and consequently can realize a good antireflection function.

BRIEF DESCRIPTION OF DRAWINGS

Fig. 1 is a cross sectional view illustrating an example of a  configuration of an optical information recording medium according to a first embodiment of the present invention.

Fig. 2A is a schematic plan view illustrating an example of a configuration of a reading surface of the optical information recording medium according to the first embodiment of the present invention.

Fig. 2B is a plan view enlarging part of the reading surface of the optical information recording medium illustrated in Fig. 2A.

Fig. 2C is a cross sectional view in tracks T1, T3 and ... in Fig. 2B.

Fig. 2D is a cross sectional view in tracks T2, T4 and ... in Fig. 2B.

Fig. 2E is a schematic diagram illustrating a modulated waveform of laser light used to form latent images corresponding to the tracks T1, T3 and ... in Fig. 2B.

Fig. 2F is a schematic diagram illustrating a modulated waveform of laser light used to form latent images corresponding to tracks T2, T4 and ... in Fig. 2B.

Fig. 3A is a cross sectional view of the reading surface illustrated in Fig. 2B in a track extending direction.

Fig. 3B is a cross sectional view of the reading surface illustrated in Fig. 2A in a $\theta$ direction.

Figs. 4A and 4B are perspective views enlarging part of the reading surface of the optical information recording medium illustrated in Fig. 2A.

Figs. 5A and 5B are perspective views enlarging part of the reading surface of the optical information recording medium illustrated in Fig. 2A.

Fig. 6A is a schematic diagram illustrating an example of an arrangement of structures having conical shapes or circular truncated conical shapes.

Fig. 6B is a schematic diagram illustrating an example of an arrangement of structures of elliptic conical shapes or elliptic truncated conical shapes.

Fig. 7A is a schematic plan view illustrating an example of a configuration of a molding surface of a reading surface forming master for forming structures on a reading surface.

Fig. 7B is a plan view enlarging part of the molding surface of the reading surface forming master illustrated in Fig. 7A.

Fig. 8 is a schematic diagram for explaining a configuration of a master exposure device used in procedure of exposing a moth-eye pattern.

Figs. 9A to 9E are procedure diagrams for explaining an example of a method of manufacturing the optical information recording medium according to the first embodiment of the present invention.

Figs. 10A to 10F are procedure diagrams for explaining an example of a method of manufacturing the optical information recording medium according to the first embodiment of the present invention.

Figs. 11A to 11I are procedure diagrams for explaining an example of a method of manufacturing the optical information recording medium according to a second embodiment of the present invention.

Fig. 12 is a cross sectional view illustrating an example of a configuration of an optical information recording medium according to a third embodiment of the present invention.

Figs. 13A to 13I are procedure diagrams for explaining an example of a method of manufacturing the optical information recording medium according to the third embodiment of the present invention.

Fig. 14 is a cross sectional view illustrating an example of a configuration of an optical information recording medium according to a fourth embodiment of the present invention.

Figs. 15A to 15J are procedure diagrams for explaining an example of a method of manufacturing the optical information recording medium according to the fourth embodiment of the present invention.

Fig. 16 is a cross sectional view illustrating an example of a configuration of an optical information recording medium according to a fifth embodiment of the present invention.

Figs. 17A to 17J are procedure diagrams for explaining an example of a method of manufacturing the optical information recording medium according to the fifth embodiment of the present invention.

Figs. 18A to 18D are procedure diagrams for explaining an example of a method of manufacturing an optical information recording medium according to a sixth embodiment of the present invention.

Figs. 19A to 19E are procedure diagrams for explaining an example of a method of manufacturing an optical information recording medium according to a seventh embodiment of the present invention.

Fig. 20 is a cross sectional view illustrating an example of a configuration of an optical information recording medium according to an eighth embodiment of the present invention.

Figs. 21A to 21G are procedure diagrams for explaining an example of a method of manufacturing the optical information recording medium according to the eighth embodiment of the present invention.

Figs. 22A to 22H are procedure diagrams for explaining an example of a method of manufacturing the optical information recording medium according to a ninth embodiment of the present invention.

Fig. 23A is a schematic plan view illustrating an example of a configuration of a reading surface of an optical information recording medium according to a tenth embodiment of the present invention.

Fig. 23B is a plan view enlarging part of the reading surface of the optical information recording medium illustrated in Fig. 23A.

Fig. 23C is a cross sectional view in tracks T1, T3 and ... in Fig. 23B.

Fig. 23D is a cross sectional view in tracks T2, T4 and ... in Fig. 23B.

Fig. 23E is a schematic diagram illustrating a modulated waveform of laser light used to form latent images corresponding to the tracks T1, T3 and ... in Fig. 23B.

Fig. 23F is a schematic diagram illustrating a modulated waveform of laser light used to form latent images corresponding to tracks T2, T4 and ... in Fig. 23B.

Fig. 24A is a schematic plan view illustrating an example of a configuration of a reading surface of an optical information recording medium according to an eleventh embodiment of the present invention.

Fig. 24B is a plan view enlarging part of a reading surface of the optical information recording medium illustrated in Fig. 24A.

Fig. 24C is a cross sectional view in tracks T1, T3 and ... in Fig. 24B.

Fig. 24D is a cross sectional view in tracks T2, T4 and ... in Fig. 24B.

Fig. 24E is a schematic diagram illustrating a modulated waveform of laser light used to form latent images corresponding to the tracks T1, T3 and ... in Fig. 24B.

Fig. 24F is a schematic diagram illustrating a modulated waveform of laser light used to form latent images corresponding to tracks T2, T4 and ... in Fig. 24B.

Fig. 25A is a schematic perspective view illustrating an example of a configuration of a molding surface of a reading surface forming master for forming structures on a reading surface.

Fig. 25B is a plan view enlarging part of the molding surface of the reading surface forming master illustrated in Fig. 25A.

Fig. 26 is a schematic diagram for explaining a configuration of a roll master exposure device used in procedure of exposing a moth-eye pattern.

Fig. 27A is a schematic plan view illustrating part of a reading surface of an optical information recording medium according to a twelfth embodiment of the present invention.

Fig. 27B is a plan view enlarging part of the reading surface of the optical information recording medium illustrated in Fig. 27A.

Fig. 28A is a schematic plan view illustrating an example of a configuration of an optical information recording medium according to a thirteenth embodiment of the present invention.

Fig. 28B is a plan view enlarging part of the optical information recording medium illustrated in Fig. 28A.

Fig. 28C is a cross sectional view in tracks T1, T3 and ... in Fig. 28B.

Fig. 28D is a cross sectional view in tracks T2, T4 and ... in Fig. 28B.

Fig. 29 is a perspective view enlarging part of the optical information recording medium illustrated in Fig. 28B.

Fig. 30 is a graph illustrating simulation results of Test Examples 1 to 3.

Figs. 31A to 31C are graphs illustrating simulation results of Test Example 4.

Figs. 32A to 32C are graphs illustrating simulation results of Test Example 5.

Figs. 33A and 33B are graphs illustrating simulation results of Test Example 6.

Figs. 34A to 34C are graphs illustrating simulation results of Test Example 7.

Figs. 35A to 35C are graphs illustrating simulation results of Test Example 8.

Figs. 36A and 36B are graphs illustrating simulation results of Test Example 9.

Figs. 37A to 37C are graphs illustrating simulation results of Test Example 10.

Figs. 38A to 38C are graphs illustrating simulation results of Test Example 11.

Figs. 39A and 39B are graphs illustrating simulation results of Test Example 12.

Fig. 40A is a graph illustrating simulation results of Test Example 13.
Fig. 40B is a graph illustrating simulation results of Test Example 14.
Fig. 40C is a graph illustrating simulation results of Test Example 15.

MODES FOR CARRYING OUT THE INVENTION

Embodiments of the present invention will be described in the following order with reference to the drawings.
1. First Embodiment (First Example of Optical Information Recording Medium in which Substrate Side is Reading Surface)
2. Second Embodiment (Second Example of Optical Information Recording Medium in which Substrate Side is Reading Surface)
3. Third Embodiment (Example of Optical Information Recording Medium of Lamination Type)
4. Fourth Embodiment (First Example of Optical Information Recording Medium having Two Information Signal Layers)
5. Fifth Embodiment (Second Example of Optical Information Recording Medium having Two Information Signal Layers)
6. Sixth Embodiment (First Example that Structures are formed in Reading Surface of Optical Information Recording Medium)
7. Seventh Embodiment (Second Example that Structures are formed in Reading Surface of Optical Information Recording Medium)
8. Eighth Embodiment (First Example of Optical Information Recording Medium in which Protective Layer Side is Reading Surface)
9. Ninth Embodiment (Second Example of Optical Information Recording Medium in which Protective Layer Side is Reading Surface)
10. Tenth Embodiment (Example that Structures are aligned in Square Lattice Pattern)
11. Eleventh Embodiment (Example that Structures are linearly aligned)
12. Twelfth Embodiment (Example that Structures are aligned in Wobbling Pattern)
13. Thirteenth Embodiment (Example that Structures of Concave

Shapes are arranged)

<1. First Embodiment>

[Configuration of Optical Information Recording Medium]

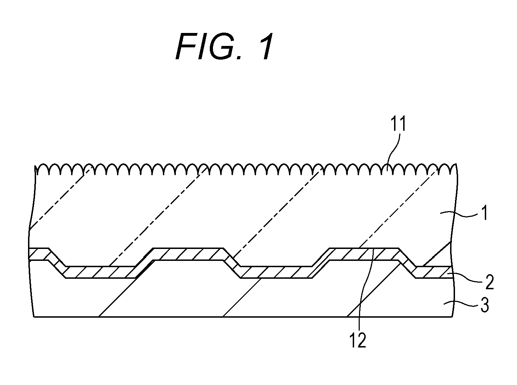

Fig. 1 is a cross sectional view illustrating an example of a configuration of an optical information recording medium according to a first embodiment of the present invention. This optical information recording medium has a substrate 1, an information signal layer 2 formed on the substrate 1 and a protective layer 3 formed on the information signal layer 2. In a reading surface of the optical information recording medium on which laser light is radiated, a plurality of subwavelength structures (also referred to simply as "structures" below) 11 having convex shapes is formed. Meanwhile, the reading surface means a surface on which an information signal is recorded and/or played back by being radiated by laser light.
In this optical information recording medium according to the first embodiment, an information signal is recorded or played back by radiating laser light on the information signal layer 2 from a substrate 1 side. For example, an objective lens having the numerical aperture of 0.45 or more and 0.50 or less condenses laser light having the wavelength of 780 nm or more and 790 nm or less, and radiates the laser light on the information signal layer 2 from the substrate 1 side, so that an information signal is recorded and/or played back. Such an optical information recording medium is, for example, a CD (Compact Disc).
When an optical information recording medium is compliant with a CD standard, an arrangement pitch of the structures 11 is preferably 900 nm or less, is more preferably 200 nm or more and 480 nm or less, and is still more preferably 240 nm or more and 400 nm or less. When the arrangement pitch exceeds 900 nm, about 780 nm which is a value obtained by multiplying 900 with $\sqrt{3}/2$ corresponds to a dimension value which is the nearest effective diffraction grating interval in case of a hexagonal lattice arrangement, and a rapid rise in the reflectivity in a region having this wavelength or less is observed and the reflectivity exceeds 1%, and therefore the antireflection effect becomes insufficient.
The height of the structures 11 is preferably 100 nm or more and 300 nm or less, is more preferably 170 nm or more and 280 nm or less, and is still more preferably 190 nm or more and 240 nm or less. When the height is less than 100 nm, the reflectivity exceeds 1%, and the antireflection effect becomes insufficient. Meanwhile, when the height exceeds 300 nm, while antireflection performance is still sufficient, the height of the structures itself increases, and therefore it is difficult to make the structures.

A flat portion diameter of a top of the structures 11 is preferably 0 fold or more and 0.8 folds or less of an arrangement pitch or greater than 0 fold and 0.8 folds or less of the arrangement pitch, is more preferably 0.4 folds or more and 0.6 folds or less of the arrangement pitch and is the most preferably 0.5 folds. When the flat portion diameter exceeds 0.8 folds, the reflectivity exceeds 1%, and the antireflection effect becomes insufficient.

The ratio ($\lambda$/H) of a wavelength $\lambda$ of light for recording or playing back an information signal to a height H of the structures 11 is preferably 2 or more and 6 or less. When the ratio is less than 2, while the antireflection performance is still sufficient, the heights of the structures 11 increase, and therefore it is difficult to make the structures. Meanwhile, when the ratio exceeds 6, the reflectivity exceeds 1%, and the antireflection effect becomes insufficient.

(Substrate)

The substrate 1 has, for example, an annular shape in which an opening (referred to as a "center hole" below) is formed in the center. The substrate 1 has a first principal surface and a second principal surface. A reading surface which is the first principal surface of the substrate 1 is a fine concave-convex surface in which the structures 11 are formed as described above. Meanwhile, the signal surface which is the second principal surface of the substrate 1 is, for example, a concave-convex surface in which concave-convex portions 12 are formed, and the information signal layer 3 is formed in this concave-convex surface. Meanwhile, the signal surface means a surface in which the information signal layer 3 is formed. The shape of these concave-convex portions 12 may take various shapes such as a spiral shape, a concentric shape or a pit array. Further, to add address information, these concave-convex portions 12 may be wobbled.

The diameter of the substrate 1 is, for example, selected to be 120 mm. The thickness of the substrate 1 is selected taking rigidity into account, and is preferably 0.3 mm to 1.3 mm, is more preferably 0.6 mm to 1.3 mm and is, for example, selected to be 1.1 mm. Further, the diameter of the center hole is, for example, selected to be 15 mm.

For example, a plastic material or glass can be used for a material of the substrate 1, and a plastic material is preferably used from a view point of cost. For example, a polycarbonate resin, a polyolefin resin or an acrylic resin can be used for the plastic material.

(Information Signal Layer)

The information signal layer 2 is formed to be capable of recording and/or playing back an information signal. This configuration is adequately selected depending on, for example, whether a desired optical information recording medium is one of a playback dedicated type, a recordable type and a rewritable type.

When the desired optical information recording medium is the playback dedicated type, the information signal layer 2 is, for example, a reflection film. A material of this reflection film is, for example, a metallic element, a metalloid element or a compound or a mixture of these. More specifically, the material is a simple substance such as aluminum (Al), silver (Ag), gold (Au), nickel (Ni), chrome (Cr), titanium (Ti), palladium (Pd), cobalt (Co), silicon (Si), tantalum (Ta), tungsten (W), molybdenum (Mo) or germanium (Ge) or an alloy which includes these simple substances as main components. Further, when practicality is taken into account, an Al, Ag, Au, Si or Ge material of these elements is preferably used.

When a desired optical information recording medium is a recordable type, the information signal layer 2 is, for example, a recordable recording layer, and, for this recording layer, a recording layer which can be generally used in a conventionally known recordable optical information recording medium can be used. More specifically, the recordable recording layer is, for example, a laminated film obtained by sequentially laminating on the optical disk substrate 1 a reflection film, an organic dye film or an inorganic recording film.

When a desired optical information recording medium is a rewritable type, the information signal layer 2 is, for example, a rewritable recording layer and, for this recording layer, a recording layer which can be generally used in a conventionally known rewritable optical information recording medium can be used. More specifically, the rewritable recording layer is, for example, a laminated film obtained by sequentially laminating on the substrate 1 a reflection film, a lower dielectric layer, a phase-change recording layer and an upper dielectric layer.

(Protective Layer)

The protective layer 3 is formed by solidifying a photosensitive resin such as an ultraviolet curable resin (UV resin). A material of the protective layer 3 is, for example, an acrylic resin of an ultraviolet curable type.

[Subwavelength Structure]

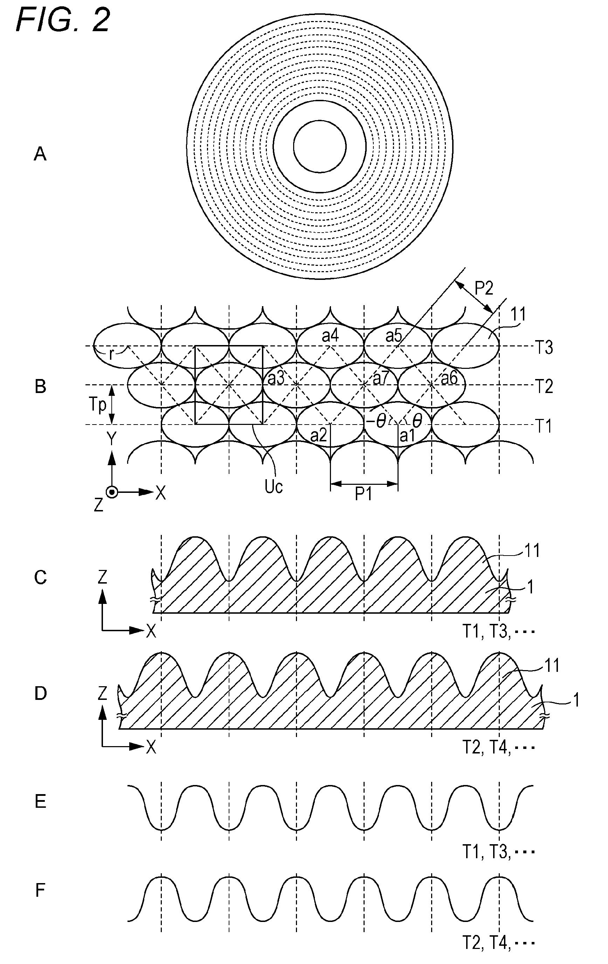

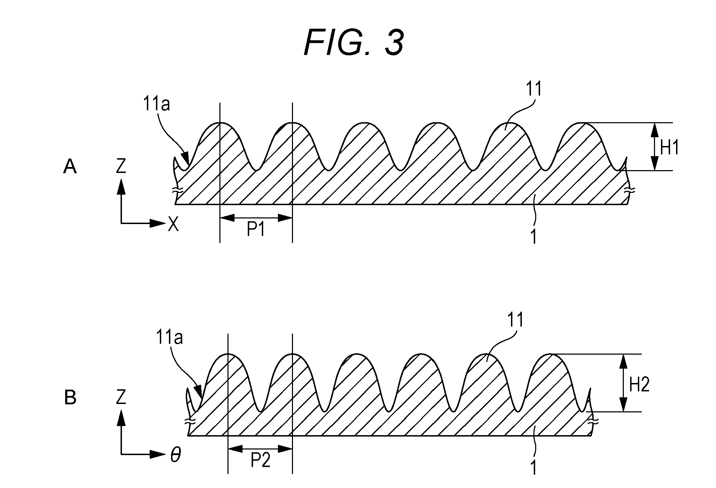

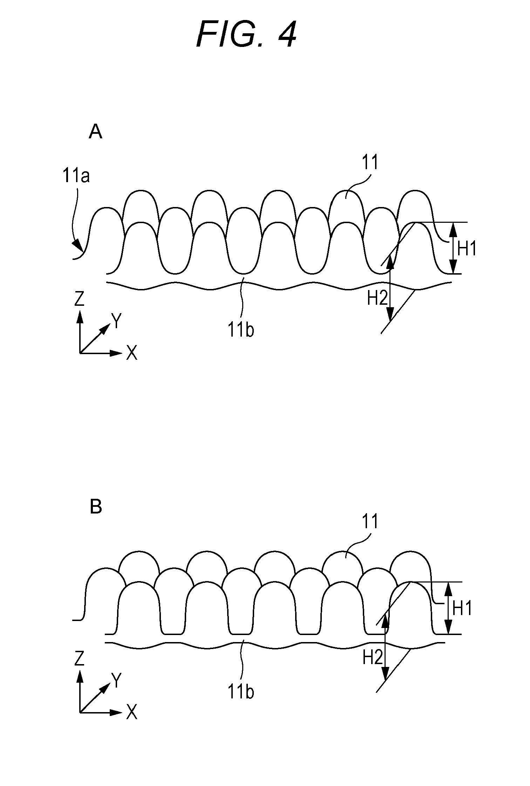

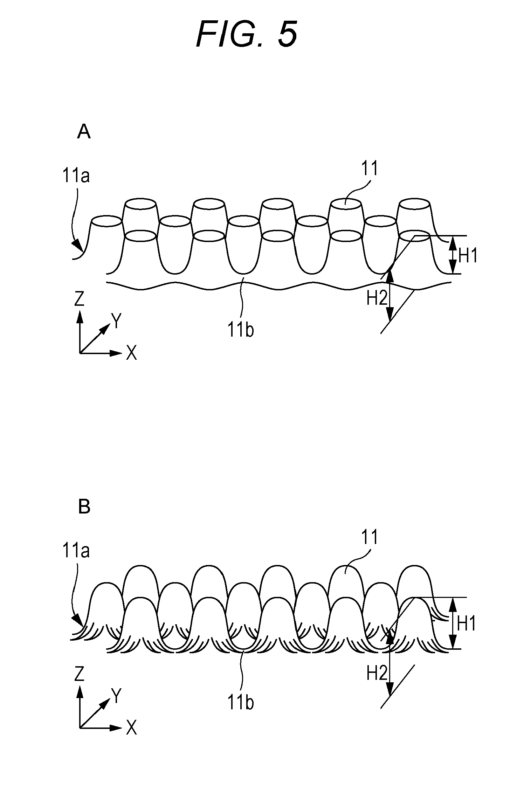

Fig. 2A is a schematic plan view illustrating an example of a configuration of a reading surface of the optical information recording medium according to the first embodiment of the present invention. Fig. 2B is a plan view enlarging part of the reading surface of the optical information recording medium illustrated in Fig. 2A. Fig. 2C is a cross sectional view in tracks T1, T3 and ... in Fig. 2B. Fig. 2D is a cross sectional view in tracks T2, T4 and ... in Fig. 2B. Fig. 2E is a schematic diagram illustrating a modulated waveform of laser light used to form latent images corresponding to the tracks T1, T3 and ... in Fig. 2B. Fig. 2F is a schematic diagram illustrating a modulated waveform of laser light used to form latent images corresponding to tracks T2, T4 and ... in Fig. 2B. Fig. 3A is a cross sectional view of the reading surface illustrated in Fig. 2B in a track extending direction (an X direction (also referred to as a "track direction")). Fig. 3B is a cross sectional view of the reading surface illustrated in Fig. 2A in a θ direction. Figs. 4A and 5B are perspective views enlarging part of the reading surface of the optical information recording medium illustrated in Fig. 2A.

A plurality of structures 11 formed in the reading surface is, for example, concentrically aligned. A plurality of structures 11 formed in the reading surface is preferably provided in two-dimensional alignment on one principal surface at an arrangement pitch equal to or less than a wavelength of laser light which is targeted to reduce reflection. Meanwhile, the arrangement pitch means an arrangement pitch P1 or an arrangement pitch P2.

The structures 11 have an arrangement mode which forms a plurality of arrays of tracks T1, T2, T3 and ... (also referred to as "tracks T" collectively below) in the reading surface of the optical information recording medium. Meanwhile, the track refers to a portion of the reading surface of the optical information recording medium at which the structures 11 are formed. The track T is preferably concentric or spiral.

The structures 11 are arranged at positions which are half a pitch displaced between two neighboring tracks T. More specifically, between the two neighboring tracks T and at intermediate positions (positions which are displaced half a pitch) of the structures 11 aligned in one track (for example, T1), the structures 11 in another track (for example, T2) are arranged. As a result, as illustrated in Fig. 2B, the structures 11 are arranged such that the hexagonal lattice pattern or the semi-hexagonal lattice pattern in which the centers of the structures 11 are positioned at respective point of a1 to a7 between three arrays of neighboring tracks (T1 to T3) is formed.

When the structures 11 are arranged to form the semi-hexagonal lattice pattern, as illustrated in Fig. 2B, the arrangement pitch P1 (the distance between a1 and a2) of the structures 11 in the same track (for example, T1) is preferably longer than an arrangement pitch of the structures 11 between two neighboring tracks (for example, T1 and T2), that is, the arrangement pitch P2 (for example, the distances between a1 and a7, and a2 and a7) of the structures 11 in $\pm\theta$ directions in the track extending direction. By arranging the structures 11 in this way, it is possible to improve a packing density of the structures 11.

From the view point of easiness of molding, the structures 11 preferably have cone shapes or cone shapes obtained by stretching or contracting the cone shapes in the track direction. The structures 11 preferably have axially symmetrical cone shapes or cone shapes obtained by stretching or contracting the cone shapes in the track direction. When the neighboring structures 11 are jointed, the structures 11 preferably have axially symmetrical cone shapes except lower portions jointed to the neighboring structures 11 or cone shapes obtained by stretching or contracting the cone shapes in the track direction. Further, a conical surface of the cone shape may be curved in a concave shape or a convex shape. The cone shape is, for example, a conical shape, a circular truncated conical shape, an elliptic conical shape, an elliptic truncated conical shape, a pyramidal shape (such as a triangular pyramidal shape, a quadrangular pyramidal shape or a pentagonal pyramidal shape) or a truncated pyramidal shape. Meanwhile, as described above, the cone shape refers to an idea including the circular truncated conical shape, the truncated pyramidal shape, the elliptic conical shape and the elliptic truncated conical shape in addition to the conical shape and the pyramidal shape. Further, the circular truncated conical shape refers to a shape obtained by cutting the top of the conical shape, the elliptic truncated conical shape refers to a shape obtained by cutting the top of the elliptic cone and the truncated pyramidal shape refers to a shape obtained by cutting the top of a pyramid.

As illustrated in Figs. 4A and 4B, the structures 11 are preferably elliptic, oval or egg-shaped cone structures which have bottom surfaces having long axes and short axes, and elliptic conical shapes having curved tops. Alternatively, as illustrated in Fig. 5B, the structure preferably has a bottom surface of an elliptic, oval or egg-shaped cone structure which has the long axis and the short axis, and a flat top of a circular truncated conical shape. By forming this shape, it is possible to improve a packing rate in an array direction.

From a view point of improvement of a reflection property, a cone shape (see Fig. 4A) having a moderate inclination at the top and an increasingly steep inclination from the center portion to the bottom portion is preferable. Further, from a view point of improvement of the reflection property and the transmission property, a cone shape (see Fig. 4B) which has a steeper inclination at the center portion than those at the bottom portion and the top or a cone shape (see Fig. 5A) which has a flat top is preferable. When the structures 11 have elliptic conical shapes or elliptic truncated conical shapes, the long axis direction of a bottom surface of these shapes is preferably parallel to the track extending direction. Although each of the structures 11 has the same shape in Figs. 4A to 5B, the shapes of the structures 11 are not limited to this, and structures 11 with two or more types of shapes may be formed on a base surface. Further, the structures 11 may be formed integrally with a base 2.

Further, as illustrated in Figs. 4A to 5B, a projecting portion 11b is preferably provided in part or entirety of the periphery of the structures 11. By so doing, even when the packing rate of the structures 11 is low, it is possible to make the reflectivity low. More specifically, as illustrated in Figs. 4A to 5A, the projecting portion 11b is provided between the neighboring structures 11. Further, as illustrated in Fig. 5B, a long and thin projecting portion 11b may be provided in part or entirety of the periphery of the structures 11. This long and thin projecting portion 11b extends, for example, in a direction from the top of the structures 11 to the lower portion. Although the shape of the projecting portion 11b includes, for example, a triangular cross section or a quadrangular cross section, the shape is not limited to these shapes in particular, and can be selected by taking into account easiness of molding. Further, the surface of part or entirety of the periphery of the structures 11 may be roughened to form fine concavities and convexities. More specifically, a surface between the neighboring structures 11 may be roughened to form fine concavities and convexities. Further, a fine hole may be formed in a surface of the structures 11, for example, the top.

The structures 11 are not limited to the illustrated convex shapes, and may be formed with a concave portion formed in the surface of the base 2. The height of the structures 11 is not limited in particular, and is, for example, about 420 nm and, more specifically, is 415 nm to 421 nm. In addition, when the structures 11 are formed in the concave shapes, the height corresponds to the depth of the structures 11.

The height H1 of the structures 11 in the track extending direction is preferably smaller than the height H2 of the structures 11 in an array direction. That is, the heights H1 and H2 of the structures 11 preferably satisfy the relationship of H1 < H2. When the structures 11 are aligned to satisfy the relationship of H1 ≥ H2, it is necessary to make the arrangement pitch P1 in the track extending direction longer, and therefore the packing rate of the structures 11 in the track extending direction decreases. When the packing rate decreases in this way, a decrease in the reflection property occurs.

In addition, the aspect ratios of the structures 11 are not limited to the same aspect ratio, each of the structures 11 may have a given height distribution (for example, in the range of about 0.83 to 1.46 of the aspect ratios). By providing the structures 11 having the height distributions, it is possible to reduce wavelength dependency of the reflection property. Consequently, it is possible to realize an optical information recording medium which has a good antireflection property.

Meanwhile, the height distribution means that the structures 11 having height (depth) of two or more types are provided on the surface of the base 2. That is, structures 11 which have reference height and structures 11 which have height different from these structures 11 are provided on the surface of the base 2. For example, the structures 11 which have the height different from the reference are cyclically or non-cyclically (at random) provided on the surface of the base 2. A direction of this cycle is, for example, the track extending direction or the array direction.

A skirt portion 11a is preferably provided to a periphery portion of the structures 11 because it is possible to easily separate the optical information recording medium from a mold or the like in procedure of manufacturing the optical information recording medium. Meanwhile, the skirt portion 11a means a projecting portion provided to the periphery portion of the bottom portion of the structures 11. From the view point of the above separation property, this skirt portion 11a preferably has a curved surface the height of which moderately decreases in the direction from the tops of the structures 11 to the lower portion. In addition, although the skirt portion 11a may be provided only to part of the periphery portion of the structures 11, the skirt portion is preferably provided to entirety of the periphery portion of the structures 11 from the view point of improvement of the separation property. Further, when the structures 11 are concave portions, the skirt portion is a curved surface provided to an opening periphery of the concave portions which are the structures 11.

The aspect ratio in the present invention is defined by the following equation (1).

$$\text{Aspect ratio} = H/P \ \dots \ (1)$$

where H: a height of a structure, and P: an average arrangement pitch (average cycle)
Meanwhile, the average arrangement pitch P is defined by the following equation (2).

$$\text{Average arrangement pitch } P = (P1 + P2 + P2)/3 \ \dots \ (2)$$

where P1: an arrangement pitch (track extending direction cycle) in a track extending direction, P2: arrangement pitches (θ direction cycle) of ±θ directions (where θ = 60° - δ, and δ is preferably 0° < δ ≤ 11° and is more preferably 3° ≤ δ ≤ 6°)

Further, the height H of the structures 11 is the height of the structures 11 in the array direction. The height of the structures 11 in the track extending direction (X direction) is lower than the height in the array direction (Y direction), and the height of a portion of the structures 11 other than in the track extending direction is substantially the same as the height in the array direction, so that the height of the subwavelength structures is represented by the height in the array direction. Meanwhile, when the structures 11 are concave portions, the height H of the structures in above equation (1) is the depth H of the structures.

When an arrangement pitch of the structures 11 in the same track is P1 and an arrangement pitch of the structures 11 between two neighboring tracks is P2, a ratio P1/P2 preferably satisfies a relationship of $1.00 \leq P1/P2 \leq 1.1$ or $1.00 < P1/P2 \leq 1.1$. By setting this numerical value range, it is possible to improve the packing rate of the structures 11 having elliptic conical shapes or elliptic truncated conical shapes and, consequently, improve the antireflection property.

The packing rate of the structures 11 on the base surface has an upper limit of 100%, and is in a range of 65% or more, preferably 73% or more and more preferably 86% or more. By setting this range of the packing rate, it is possible to improve the antireflection property. To improve the packing rate, it is preferably to joint the lower portions of the neighboring structures 11 or adjust the ellipticity of structure bottom surfaces to apply distortions to the structures 11.

Meanwhile, the packing rate (average packing rate) of the structures 11 is a value calculated as follows.

First, an image of the surface of the optical information recording medium is captured from a top view using a scanning electron microscope (SEM). Next, a unit cell Uc is selected at random from the captured SEM picture to measure the arrangement pitch P1 of the unit cell Uc and the track pitch Tp (see Fig. 4B). Further, an area S of the bottom surface of the structure 11 which is positioned in the center of this unit cell Uc is measured by image processing. Next, the packing rate is calculated according to the following equation (3) using the measured arrangement pitch P1, track pitch Tp and bottom surface area S.

$$\texttt{Packing rate = (S(hex.)/S(unit)) × 100 ... (3)}$$

$$\texttt{Unit cell area: S(unit) = P1×2Tp}$$

Area of bottom surface of structure existing in unit cell: S(hex.) = 2S

The above processing of calculating the packing rate is performed for ten unit cells selected at random from the captured SEM picture. Further, by simply averaging (taking an arithmetic average of) measurement values, the average rate of the packing rates is calculated as the packing rate of the structures 11 on the base surface.

When the structures 11 overlap or there are substructures such as the projecting portion 11b between the structures 11, it is possible to calculate the packing rate according to a method of deciding an area ratio to the height of the structures 11 by using a portion corresponding to 5% of the height as a threshold.

When the structures 11 form the semi-hexagonal lattice pattern, an ellipticity e of a structure bottom surface is preferably 100% < e < 150% or less. This is because, by setting this range, it is possible to improve the packing rate of the structures 11 and obtain the good antireflection property.

Meanwhile, the ellipticity e is defined by (a/b) $\times$ 100 when the diameter of the structure bottom surface in the track direction (X direction) is a and the diameter in the array direction (Y direction) orthogonal to the diameter a is b. In addition, the diameters a and b of the structures 11 are values calculated as follows. First, an image of the surface of the optical information recording medium is captured from a top view using a scanning electron microscope (SEM) to extract the ten structures 11 at random from the captured SEM picture. Next, the diameters a and b of each of the extracted structures 11 are measured. Further, by simply averaging (taking an arithmetic average of) measurement values, average values of the diameters a and b of the structures 11 are calculated as the diameters a and b of the structures 11.

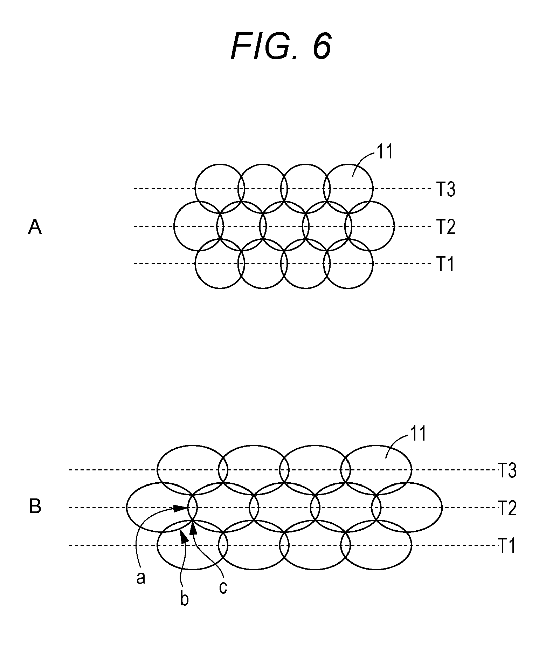

Fig. 6A illustrates an example of an arrangement of the structures 11 having conical shapes or circular truncated conical shapes. Fig. 6B illustrates an example of an arrangement of the structures 11 of elliptic conical shapes or elliptic truncated conical shapes. As illustrated in Figs. 6A and 6B, the structures 11 are preferably jointed such that lower portions overlap each other. More specifically, the lower portions of the structures 11 are preferably jointed to a partial or entire lower portions of the neighboring structures 11. More specifically, in the track direction, in the θ direction or in both directions, the lower portions of the structures 11 are preferably jointed. More specifically, in the track direction, in the θ direction or in both directions, the lower portions of the structures 11 are preferably jointed. Figs. 6A and 6B illustrate examples that entire lower portions of the neighboring structures 11 are jointed. By jointing the structures 11 in this way, it is possible to improve the packing rate of the structures 11. The structures are preferably jointed at portions which are the one fourth of the maximum value of a wavelength band of light under use environment in an optical path which takes the reflectivity into account. By this means, it is possible to obtain the good antireflection property.

As illustrated in Fig. 6B, when the lower portions of the structures 11 having the elliptic conical shapes or the elliptic truncated conical shapes are jointed, the heights of joint portions become lower in order of the joint portions a, b and c.

The ratio $((2r/P1) \times 100)$ of a diameter $2r$ to the arrangement pitch $P1$ is 85% or more, is preferably 90% or more and is more preferably 95% or more. By setting this range, it is possible to improve the packing rate of the structures 11 and improve the antireflection property. When the ratio $((2r/P1) \times 100)$ becomes large and the degree of overlapping of the structures 11 is higher, the antireflection property tends to decrease. Hence, an upper limit value of the ratio $((2r/P1) \times 100)$ is preferably set such that the structures are jointed at portions which are the one fourth of the maximum value of a wavelength band of light under use environment in an optical path which takes the reflectivity into account. Meanwhile, the arrangement pitch $P1$ is an arrangement pitch of the structures 11 in the track direction, and the diameter $2r$ is the diameter of a structure bottom surface in the track direction. In addition, when the structure bottom surface is circular, the diameter $2r$ is the diameter, and, when the structure bottom surface is elliptic, the diameter $2r$ is the long diameter.

[Configuration of Reading Surface Forming Master]

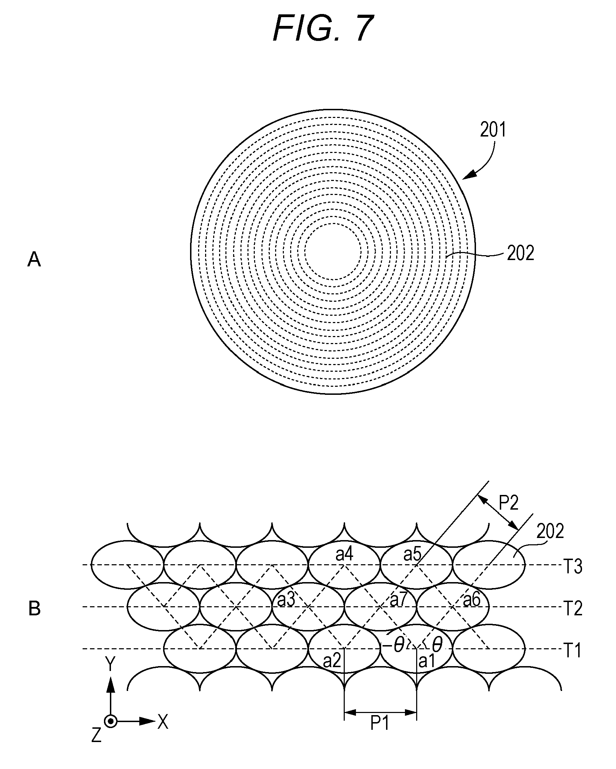

Fig. 7A is a schematic plan view illustrating an example of a configuration of a molding surface of a reading surface forming master for forming above structures on a reading surface. Fig. 7B is a plan view enlarging part of the molding surface of the reading surface forming master illustrated in Fig. 7A. A reading surface forming master 201 has a circular disk shape, and a plurality of structures 202 having concave shapes is aligned on the surface of the reading surface forming master. The structures 202 are arranged on, for example, a concentric or spiral track. Although, for example, glass can be used for a material of the reading surface forming master 201, this material is not limited in particular. By spatially linking two dimensional patterns using a roll master exposure device described below, synchronizing a polarity inversion formatter signal and a rotation controller of a recording device per one track, generating a signal and performing patterning at an adequate feed pitch using CAV, it is possible to record a hexagonal lattice pattern or a semi-hexagonal lattice pattern. By adequately setting the frequency of the polarity inversion formatter signal and the number of rotations of roll, it is possible to form a lattice pattern of a uniform spatial frequency in a desired recording region.

[Configuration of Exposure Device]

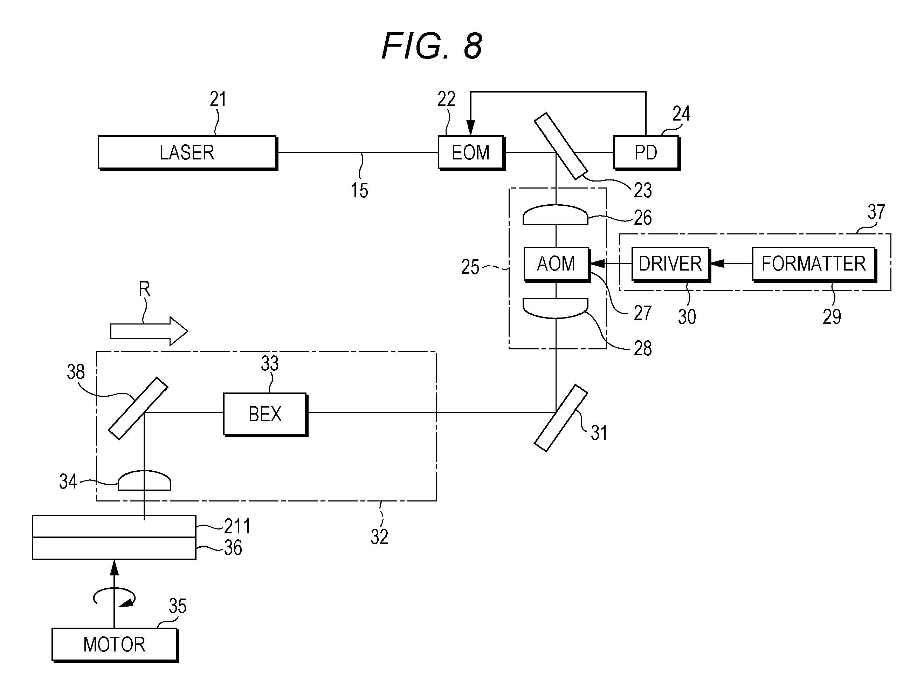

First, a configuration of the master exposure device used for procedure of exposing a moth-eye pattern will be described with reference to Fig. 8. This master exposure device is formed based on an optical disk recording device.

A laser light source 21 is a light source which exposes a resist layer deposited on a surface of a master 211 as a recording medium, and oscillates recording laser light 15 of, for example, a wavelength $\lambda$ = 266 nm. The laser light 15 emitted from the laser light source 21 travels straightforward as a parallel beam, and is incident on an electro optical modulator (EOM) 22. The laser light 15 having transmitted through the electro optical modulator 22 is reflected by a mirror 23, and is guided to a modulating optical system 25.

The mirror 23 is formed with a polarized beam splitter, and has a function of reflecting one polarization component and allowing transmission of the other polarization component. The polarization component having transmitted through the mirror 23 is received by a photodiode 24, and the electro optical modulator 22 is controlled based on this received light signal to modulate the phase of the laser light 15.

In the modulating optical system 25, the laser light 15 is condensed on an acousto-optic modulator (AOM) 27 made of glass ($SiO_2$) or the like by a condenser lens 26. The intensity of the laser light 15 is modulated by the acousto-optic modulator 27, and the laser light is spread and converted into a parallel beam by a lens 28. The laser light 15 emitted from the modulating optical system 25 is reflected by a mirror 31, and is guided horizontally and in parallel on a moving optical table 32.

The moving optical table 32 has a beam expander 33 and an objective lens 34. The laser light 15 guided to the moving optical table 32 is shaped into a desired beam shape by the beam expander 33, and then is radiated on the resist layer on the master 12 through a mirror 38 and the objective lens 34. The master 12 is set on a turn table 36 connected to a spindle motor 35. Further, by rotating the master 211, guiding the laser light 15 in a radial direction of the master 211 and intermittently radiating the laser light 15 on the resist layer, procedure of exposing the resist layer is performed. A formed latent image has a virtually elliptic shape which has a long axis in a circumferential direction. The laser light 15 is moved by moving the moving optical table 32 in an arrow R direction.

The exposure device has a control mechanism 37 which forms on the resist layer a latent image corresponding to a two dimensional pattern of a hexagonal lattice or a semi-hexagonal lattice. The control mechanism 37 has a formatter 29 and a driver 30. The formatter 29 has a polarity inverting unit, and this polarity inverting unit controls timing to radiate the laser light 15 on the resist layer. The driver 30 receives an output from the polarity inverting unit, and controls the acousto-optic modulator 27.

This roll master exposure device generates a signal by synchronizing a polarity inversion formatter signal and the rotation controller of the recording device per one track such that two dimensional patterns are spatially linked, and the acousto-optic modulator 27 modulates the intensity. By performing patterning at a constant angular velocity (CAV), at an adequate modulation frequency, at an adequate feed pitch and with the adequate number of rotations, it is possible to record a hexagonal lattice or semi-hexagonal lattice pattern. For example, the feed pitch only needs to be set to 251 nm to set a cycle in the circumferential direction to 315 nm and set the cycle in an about 60 degree direction (about -60 degree direction) with respect to the circumferential direction to 300 nm (the Pythagorean theorem). The frequency of the polarity inversion formatter signal is changed by the number of rotations of roll (1800 rpm, 900 rpm and 450 rpm). The semi-hexagonal lattice pattern in which the spatial frequency (a circle 315 nm cycle, and a circumferential direction about 60 degree direction (about -60 degree direction) 300 nm cycle) in a desired recording region is uniform is obtained by expanding far ultraviolet laser light to a five-fold beam diameter by the beam expander (BEX) 33 on the moving optical table 32, radiating the laser light on the resist layer on the master 12 through the objective lens 34 of a numerical aperture (NA) 0.9 and forming a fine latent image.

[Method of Manufacturing Optical Information Recording Medium]

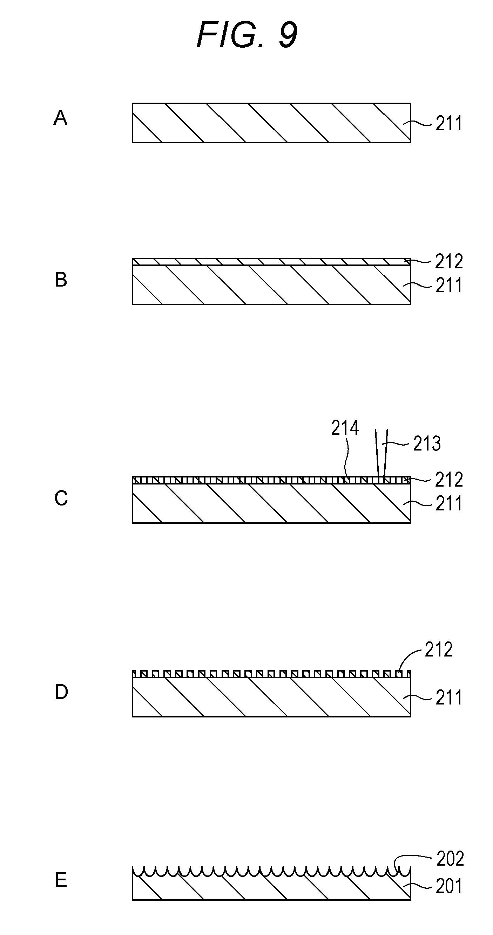

Figs. 9A to 10F are procedure diagrams for explaining an example of a method of manufacturing the optical information recording medium according to the first embodiment of the present invention.

(Resist Film Forming Procedure)

First, as illustrated in Fig. 9A, a master 211 of a circular disk shape is prepared. Next, as illustrated in Fig. 9B, the resist layer 212 is formed on the surface of the master 211. As a material of the resist layer 212, for example, one of an organic resist and an inorganic resist may be used. As the organic resist, for example, a novolac resist or a chemically-amplified resist can be used. Further, as the inorganic resist, for example, a metal compound including transition metals of one, two or more types can be used.

(Exposure Procedure)

Next, as illustrated in Fig. 9C, the master 211 is rotated using the above master exposure device, and the laser light 213 which is an exposure beam is radiated on the resist layer 212. In this case, by intermittently radiating the laser light 213 while moving the laser light 213 in the radial direction of the master 211, the entire surface of the resist layer 212 is exposed. By this means, a latent image 214 matching a trajectory of the laser light 213 is formed on the entire surface of the resist layer 212.

For example, the latent image 214 is arranged to form a plurality of arrays of tracks on a master surface, and forms a hexagonal lattice pattern or a semi-hexagonal lattice pattern. The latent image 212 has, for example, an elliptic shape having a long axis direction in the track extending direction.

(Developing Procedure)

Next, a developer is dropped on the resist layer 212 while rotating the master 211 to develop the resist layer 212 as illustrated in Fig. 9D. As illustrated, when the resist layer 212 is formed with a positive resist, a solution rate of an exposed portion exposed by the laser light 213 with respect to the developer increases compared to a non-exposed portion, and a pattern matching the latent image (exposed portion) 214 is formed on the resist layer 212.

(Etching Procedure)

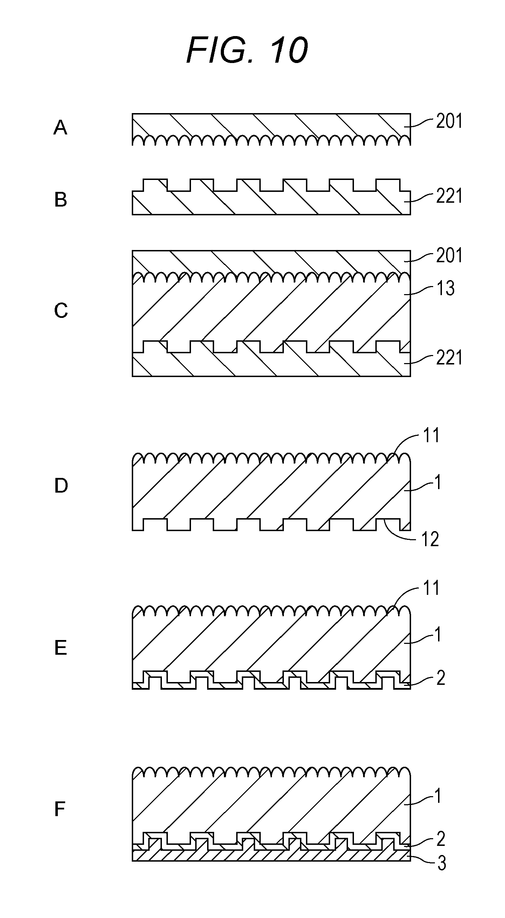

Next, the surface of the master 211 is etched using the pattern (resist pattern) of the resist layer 212 formed on the master 211 as a mask. By this means, as illustrated in Fig. 9E, concave portions of elliptic conical shapes or elliptic truncated conical shapes having the long axis direction in the track extending direction, that is, the structures 202 are obtained. An etching method is performed by, for example, dry etching. In this case, by alternately performing etching processing and ashing processing, it is possible to form, for example, a pattern of the structures 202 of cone shapes. Further, it is possible to make a glass master having a three-fold depth (selectivity 3 or more) or more compared to the resist layer 212, and make the aspect ratio of the structures 202 higher. Thus, as illustrated in Fig. 10A, the reading surface forming master 201 having, for example, the hexagonal lattice pattern or the semi-hexagonal lattice pattern is obtained.

(Transferring Procedure)

Next, as illustrated in Fig. 10B, the signal surface forming master 221 on which concavities and convexities for forming the signal surface on the surface is prepared. For this signal surface forming master 221, a known stamper (generally referred to as a "mold" or a "template" for use of nanoimprint) upon manufacturing of optical disks such as conventional CDs can be used. Such a stamper is, for example, a nickel stamper.

Next, as illustrated in Fig. 10C, according to, for example, an injection molding method, shapes of the reading surface forming master 201 and the signal surface forming master 221 are transferred to the resin material 13. By this means, as illustrated in Fig. 10D, the substrate 1 on both surfaces of which the shapes are transferred is obtained. More specifically, for example, the substrate 1 is formed as follows. First, the reading surface forming master 201 is arranged on a mirror surface of one mold of an injection molding device, and the signal surface forming master 221 is arranged on a mirror surface of the other mold of the injection molding device. Next, for example, a cavity is formed by making both molds butt, a resin material melted in this cavity is supplied and solidified, and both molds are separated. By this means, the substrate 1 in which the concave-convex portions 12 are formed in the signal surface, and a plurality of structures 11 is formed in the reading surface.

(Information Signal Layer Forming Procedure)

Next, as illustrated in Fig. 10E, the information signal layer 2 is formed on the concave-convex portions 12 of the substrate 1 using, for example, a spattering method or a spin coat method.

(Protective Layer Forming Procedure)

Next, as illustrated in Fig. 10F, a photosensitive resin such as an ultraviolet curable resin is applied to the information signal layer 2 according to, for example, the spin coat method, and the layer is radiated with light such as an ultraviolet ray and is solidified to form the protective layer 3.

According to the above procedure, a target optical information recording medium is obtained.

According to the first embodiment, a plurality of structures 11 is formed on the reading surface of the optical information recording medium, so that it is possible to reduce reflection of recording light or playback light on the reading surface.

By, for example, decreasing the surface reflectivity of an optical disk by about 4 to 5%, it is not necessary to input excessive power of playback and recording laser using an optical pickup of a player (drive) and, consequently, it is possible to reduce a load on the laser and increase the longevity of the laser. Particularly, this is effective for use in recording which requires high power such as high speed rotation (for example, 6X or 8X) recording of a DVD or a BD.

By, for example, suppressing about 4% to 5% corresponding to a decrease in the signal reflectivity from a disk upon disk playback, it is possible to prevent a decrease in the amount of signal and deterioration of signal quality such as deterioration of the S/N ratio. Further, it is also possible to reduce a load on the playback system on the player (drive) side and play back signals well. The amount of playback signal decreases upon high speed rotation (for example, 6X or 8X) playback of a DVD or a BD in particular, and therefore preventing loss of the amount of playback signal and deterioration of S/N is effective.

As antireflection film specifications of the low reflectivity such as a DVD-DL specification, a BD-DL specification and a future BD multi-layer structure specification increase, it is possible to prevent the reflectivity of a disk surface from being erroneously recognized as a reflection layer by the player (drive).

For example, it is possible to suppress about 4 to 5% at which a signal returning form the disk reflection film decreases due to reflection on the disk surface, so that a setting which is required to set a higher reflectivity taking this loss of this standard into account is not required. Consequently, a process margin of setting a thin reflection film and material cost become more advantageous.

Particularly, in case of the multi-player structure disk, when the original reflectivity is maintained as a result of improvement of the reflectivity of a reflection film, it is possible to provide advantages of, for example, improving the entire balance and increase the number of reflection films by making the reflection film thinner and improving the transmittance.

For example, the subwavelength structures can reduce the reflectivity to 0.2% or less in the entire visible light region of 400 to 850 nm, so that single structures can provide an effect of reducing the reflectivity for CD 780 nm, DVD 650 nm and BD 405 nm pickup lasers to the same degree.

In addition to improvement of the optical disk optical property, forming the subwavelength structures on the disk reading surface provides a water repellent function like a lotus leaf structure and can provide a function of preventing contamination.

<2. Second Embodiment>

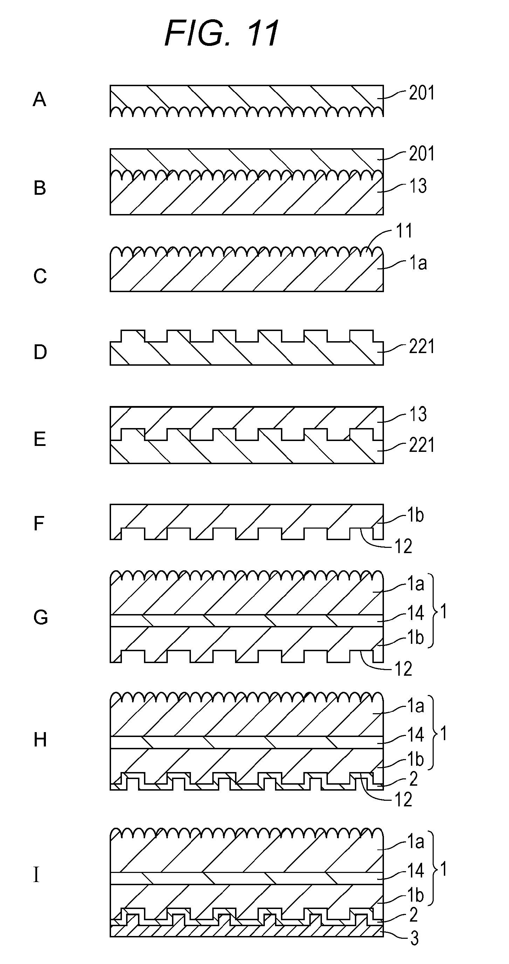

Fig. 11 is a procedure diagram for explaining an example of a method of manufacturing the optical information recording medium according to a second embodiment of the present invention. The second embodiment of the present invention differs from the first embodiment in forming a substrate 1 by laminating a first compact 1a and a second compact 1b. In addition, portions of the second embodiment corresponding to those of the first embodiment will be assigned the same reference numerals.

(Transferring Procedure)

First, as illustrated in Fig. 11A, a reading surface forming master 201 is prepared. Next, as illustrated in Fig. 11B, according to, for example, an injection molding method, the shape of the reading surface forming master 201 is transferred to a resin material 13. By this means, as illustrated in Fig. 11C, a first compact 1a in which a plurality of structures 11 is formed in one principal surface and a flat surface is formed in the other principal surface is obtained. The first compact 1a has, for example, a sheet shape or a flat shape and is preferably flat from the view point of easiness to handle.

Next, as illustrated in Fig. 11D, the signal surface forming master 221 is prepared. Next, as illustrated in Fig. 11E, according to, for example, an injection molding method, the shape of the signal surface forming master 201 is transferred to the resin material 13. By this means, as illustrated in Fig. 11F, the second compact 1b in which concave-convex portions 12 are formed in one principal surface and a flat surface is formed in the other principal surface is obtained. The second compact 1b has, for example, a sheet shape or a flat shape and is preferably flat from the view point of easiness to handle.

(Laminating Procedure)

Next, as illustrated in Fig. 11G, a substrate 1 is obtained by laminating the flat surfaces of the first compact 1a and the second compact 1b across a laminating layer 14. For a material of the laminating layer 14, a material which includes main components such as an ultraviolet curable resin and a pressure sensitive adhesive (PSA) can be used. When the laminating layer 14 includes the pressure sensitive adhesive as the main component, the laminating layer 14 may be formed in advance on one flat surface of the first compact 1a and the second compact 1b.

(Information Signal Layer Forming Procedure)

Next, as illustrated in Fig. 11H, the information signal layer 2 is formed on the concave-convex portions 12 of the substrate 1 using, for example, a spattering method or a spin coat method.

(Protective Layer Forming Procedure)

Next, as illustrated in Fig. 11I, a photosensitive resin such as an ultraviolet curable resin is applied to the information signal layer 2 according to, for example, the spin coat method, and the layer is radiated with light such as an ultraviolet ray and is solidified to form the protective layer 3.

According to the above procedure, a target optical information recording medium is obtained.

<3. Third Embodiment>

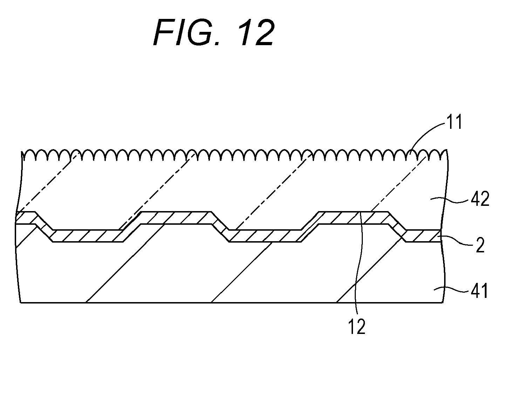

Fig. 12 is a cross sectional view illustrating an example of a configuration of an optical information recording medium according to a third embodiment of the present invention. This optical information recording medium has a first substrate 41, an information signal layer 2 formed on the first substrate 41 and a second substrate 42 formed on the information signal layer 2. In the surface of the second substrate 42, a plurality of structures 11 having convex shapes is formed. The same portions of the third embodiment as those of the first embodiment will be assigned the same reference numerals, and will not be described.

In this optical information recording medium, an information signal is recorded and/or played back by radiating laser light on the information signal layer 2 from a second substrate 42 side. For example, an objective lens having the numerical aperture of 0.64 or more and 0.66 or less condenses laser light having the wavelength of 650 nm or more and 665 nm or less, and radiates the laser light on the information signal layer 2 from the second substrate 41 side, so that an information signal is recorded and/or played back. Such an optical information recording medium is, for example, a DVD (Digital Versatile Disc).

When an optical information recording medium is compliant with a DVD standard, an arrangement pitch of the structures 11 is preferably 750 nm or less, is more preferably 150 nm or more and 450 nm or less, and is still more preferably 240 nm or more and 400 nm or less. When the arrangement pitch exceeds 750 nm, about 650 nm which is a value obtained by multiplying 750 with $\sqrt{3}/2$ corresponds to a dimension value which is the nearest effective diffraction grating interval in case of a hexagonal lattice arrangement, and a rapid rise in the reflectivity in a region having this wavelength or less is observed and the reflectivity exceeds 1%, and therefore the antireflection effect becomes insufficient.

The height of the structures 11 is preferably 80 nm or more and 240 nm or less, is more preferably 140 nm or more and 200 nm or less, and is still more preferably 160 nm or more and 180 nm or less. When the height is less than 80 nm, the reflectivity exceeds 1%, and the antireflection effect becomes insufficient. Meanwhile, when the height exceeds 240 nm, while antireflection performance is still sufficient, the height of the structures 11 increases, and therefore it is difficult to make the structures.

A flat portion diameter of a top of the structures 11 is preferably 0 fold or more and 0.7 folds or less of an arrangement pitch or greater than 0 fold and 0.7 folds or less of the arrangement pitch, is more preferably 0.4 folds or more and 0.6 folds or less of the arrangement pitch and is the most preferably 0.5 folds. When the flat portion diameter exceeds 0.7 folds, the reflectivity exceeds 1%, and the antireflection effect becomes insufficient.

The ratio ($\lambda$/H) of a wavelength $\lambda$ of light for recording or playing back an information signal to a height H of the structures 11 is preferably 2 or more and 6 or less. When the ratio is less than 2, while the antireflection performance is still sufficient, the heights of the structures 11 increase, and therefore it is difficult to make the structures. Meanwhile, when the ratio exceeds 6, the reflectivity exceeds 1%, and the antireflection effect becomes insufficient.

The first substrate 41 and the second substrate 42 have annular shapes in which center holes (not illustrated) are formed in the centers, and the thicknesses are, for example, selected to be 0.6 mm. A plurality of structures 11 is formed in one principal surface of the second substrate 42, and concave-convex portions 11 are formed in the other principal surface. For materials of the first substrate 41 and the second substrate 42, the same material as a substrate 1 in the first embodiment can be used.

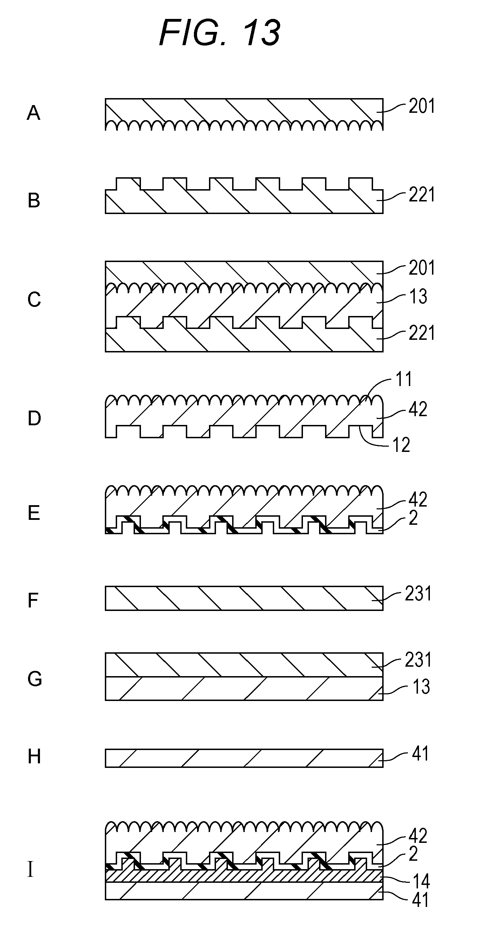

Figs. 13A to 13I are procedure diagrams for explaining an example of a method of manufacturing the optical information recording medium according to the third embodiment of the present invention.

(Transferring Procedure)

First, as illustrated in Figs. 13A and 13B, a reading surface molding master 201 and a signal surface forming master 221 are prepared. Next, as illustrated in Fig. 13C, according to, for example, an injection molding method, the shapes of the reading surface molding master 201 and the signal surface forming master 221 are transferred to a resin material 13. By this means, as illustrated in Fig. 13D, the second substrate 42 in which a plurality of structures 11 is formed in one principal surface and the concave-convex portions 12 are formed in the other principal surface is obtained.

(Information Signal Layer Forming Procedure)

Next, as illustrated in Fig. 13E, the information signal layer 2 is formed on the concave-convex portions 12 of the second substrate 42 using, for example, a spattering method or a spin coat method.

(Transferring Procedure)

Next, as illustrated in Fig. 13F, for example, a master 231 or a mold which has a smooth molding surface is prepared. Next, as illustrated in Fig. 13G, according to, for example, an injection molding method, the shape of the smooth molding surface of the master 231 or the mold is transferred to the resin material 13. By this means, as illustrated in Fig. 13H, the first substrate 41 which has smooth surfaces on both principal surfaces is formed.

(Laminating Procedure)

Next, as illustrated in Fig. 13I, the smooth surface of the first substrate 41 and the information signal layer forming surface of the second substrate 42 are laminated by a laminating layer 14.

According to the above procedure, a target optical information recording medium is obtained.

<4. Fourth Embodiment>

(Configuration of Optical Information Recording Medium)

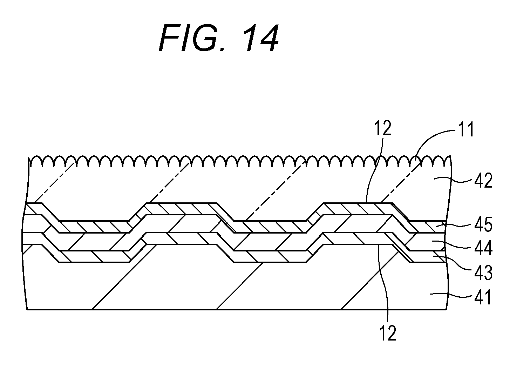

Fig. 14 is a cross sectional view illustrating an example of a configuration of an optical information recording medium according to a fourth embodiment of the present invention. The optical information recording medium has a configuration in which a first substrate 41, a first information signal layer (referred to as a "L0 layer") 43, an intermediate layer 44, a second information signal layer (referred to as a "L1 layer") 45 and a second substrate 42 sequentially are laminated in this order. The same portions of the fourth embodiment as those of the third embodiment will be assigned the same reference numerals, and will not be described.

The first information signal layer 43 and the second information signal layer 45 are formed to be capable of recording and/or playing back an information signal. This configuration is adequately selected depending on, for example, whether a desired optical information recording medium is one of a playback dedicated type, a recordable type and a rewritable type. The second information signal layer 45 differs from the first information signal layer 43 in a semi-transmission layer which is formed to reflect laser light and allows transmission of laser light.

The intermediate layer 44 is made of a resin material which has transparency with respect to laser light for recording and/or playing back an information signal, and, for example, a plastic material such as a polycarbonate resin, a polyolefin resin or an acrylic resin can be used as such a material.

(Method of Manufacturing Optical Information Recording Medium)

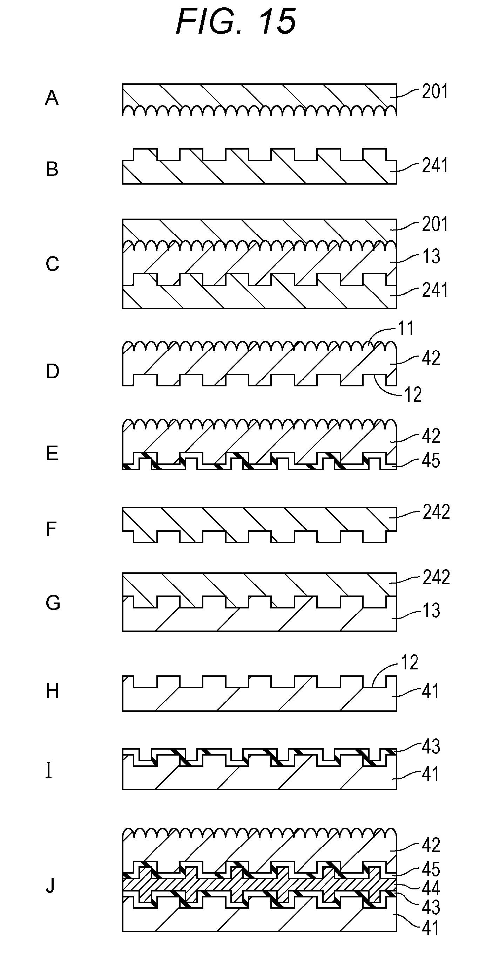

Figs. 15A to 15J are procedure diagrams for explaining an example of a method of manufacturing the optical information recording medium according to the fourth embodiment of the present invention.

(Transferring Procedure)

First, as illustrated in Figs. 15A and 15B, a reading surface molding master 201 and a first signal surface forming master 241 are prepared. Next, as illustrated in Fig. 15C, according to, for example, an injection molding method, the shapes of the reading surface molding master 201 and the first signal surface forming master 241 are transferred to a resin material 13. By this means, as illustrated in Fig. 15D, the second substrate 42 in which a plurality of structures 11 is formed in one principal surface and the concave-convex portions 12 are formed in the other principal surface is obtained.

(Information Signal Layer Forming Procedure)

Next, as illustrated in Fig. 15E, the information signal layer 45 is formed on the concave-convex portions 12 of the second substrate 42 using, for example, a spattering method or a spin coat method.

(Transferring Procedure)

Next, as illustrated in Fig. 15F, a second signal surface forming master 242 is prepared. Next, as illustrated in Fig. 15G, according to, for example, an injection molding method, the shape of the second signal surface forming master 242 is transferred to the resin material 13. By this means, as illustrated in Fig. 15H, the first substrate 41 in which concave-convex portions 12 are formed in one principal surface and a smooth surface is formed in the other principal surface is obtained.

(Information Signal Layer Forming Procedure)

Next, as illustrated in Fig. 15I, the information signal layer 43 is formed on the concave-convex portions 12 of the first substrate 41 using, for example, a spattering method or a spin coat method.

(Laminating Procedure)

Next, as illustrated in Fig. 15J, the first information signal layer forming surface of the first substrate 41 and the second information signal layer forming surface of the second substrate 42 are laminated by the intermediate layer 44.

According to the above procedure, a target optical information recording medium is obtained.

EP 2 672 482 A1

<5. Fifth Embodiment>

(Configuration of Optical Information Recording Medium)

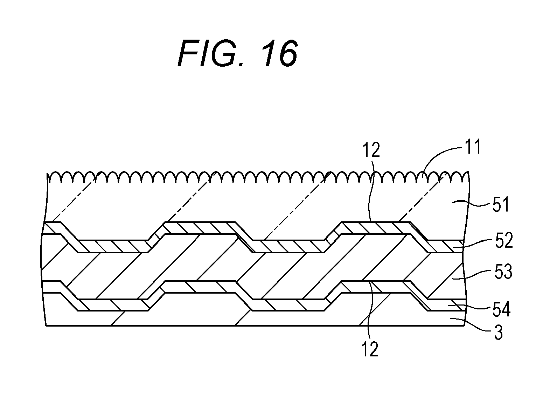

Fig. 16 is a cross sectional view illustrating an example of a configuration of an optical information recording medium according to a fifth embodiment of the present invention. The optical information recording medium has a first substrate 51, a first information signal layer 52, a second substrate 53, a second information signal layer 54 and a protective layer 3 sequentially laminated in this order. The same portions of the fifth embodiment as those of the first embodiment will be assigned the same reference numerals, and will not be described.

The first substrate 51 and the second substrate 53 have annular shapes in which center holes (not illustrated) are formed in the centers, and the thicknesses are, for example, selected to be 0.6 mm. A plurality of structures 11 is formed in one principal surface of the first substrate 51, and concave-convex portions 12 are formed in the other principal surface. The concave-convex portions 12 are formed in one principal surface of the second substrate 53. For materials of the first substrate 51 and the second substrate 53, the same material as that of a substrate 1 in the first embodiment can be used. The first information signal layer 52 is a semi-transmission layer which has a configuration which reflects laser light and allows transmission of laser light. The first information signal layer 52 employs a configuration which enables, for example, high density recording compared to the second information signal layer 54.

(Method of Manufacturing Optical Information Recording Medium)

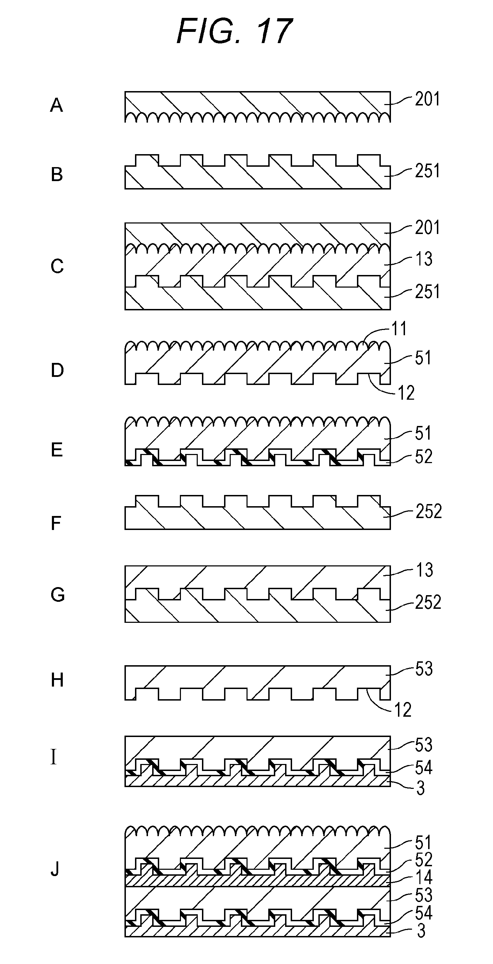

Figs. 17A to 17J are procedure diagrams for explaining an example of a method of manufacturing the optical information recording medium according to the fifth embodiment of the present invention.

(Transferring Procedure)

First, as illustrated in Figs. 17A and 17B, a reading surface molding master 201 and a first signal surface forming master 251 are prepared. Next, as illustrated in Fig. 17C, according to, for example, an injection molding method, the shapes of the reading surface molding master 201 and the first signal surface forming master 251 are transferred to a resin material 13. By this means, as illustrated in Fig. 17D, the first substrate 51 in which a plurality of structures 11 is formed in one principal surface and the concave-convex portions 12 are formed in the other principal surface is obtained.

(Information Signal Layer Forming Procedure)

Next, as illustrated in Fig. 17E, the first information signal layer 52 is formed on the concave-convex portions 12 of the first substrate 51 using, for example, a spattering method or a spin coat method.

(Transferring Procedure)

Next, as illustrated in Fig. 17F, a second signal surface forming master 252 is prepared. Next, as illustrated in Fig. 17G, according to, for example, an injection molding method, the shape of the second signal surface forming master 252 is transferred to the resin material 13. By this means, as illustrated in Fig. 17H, the second substrate 53 in which the concave-convex portions 12 are formed in one principal surface and a smooth surface is formed in the other principal surface is obtained.

(Information Signal Layer Forming Procedure)

Next, as illustrated in Fig. 17I, the second information signal layer 54 is formed on the concave-convex portions 12 of the second substrate 53 using, for example, a spattering method or a spin coat method.

(Protective Layer Forming Procedure)

Next, as illustrated in Fig. 17I, a photosensitive resin such as an ultraviolet curable resin is applied to the second information signal layer 2 according to, for example, the spin coat method, and the layer is radiated with light such as an ultraviolet ray and is solidified to form the protective layer 3.

(Laminating Procedure)

Next, as illustrated in Fig. 17J, the signal surface of the first substrate 51 and the smooth surface of the second

17

substrate 42 are laminated by a laminating layer 14.

According to the above procedure, a target optical information recording medium is obtained.

<6. Sixth Embodiment>

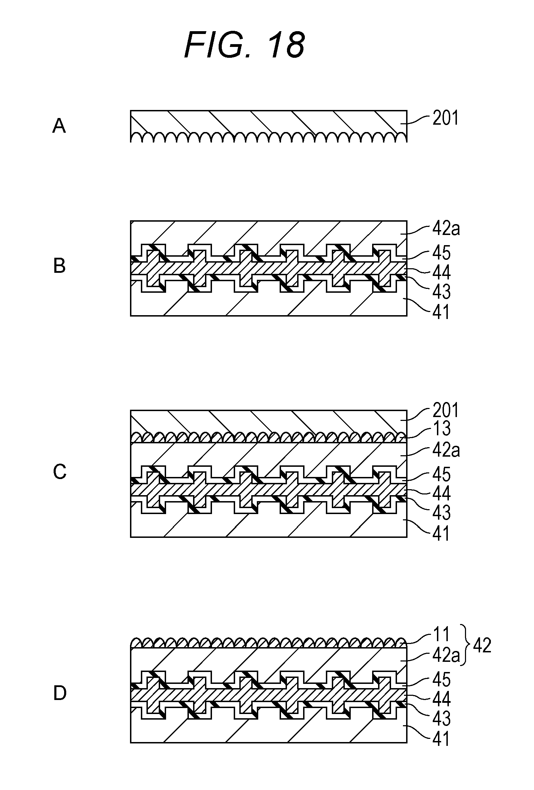

Figs. 18A to 18D are procedure diagrams for explaining an example of a method of manufacturing an optical information recording medium according to a sixth embodiment of the present invention. The sixth embodiment of the present invention differs from the fourth embodiment in forming a plurality of structures 11 in a reading surface of an optical information recording medium in final procedure. In addition, the same portions of the sixth embodiment as those of the first embodiment will be assigned the same reference numerals.

First, as illustrated in Fig. 18A, a reading surface forming master 201 is prepared. Next, as illustrated in Fig. 18B, an optical information recording medium in which a first substrate 41, a second information signal layer 43, an intermediate layer 44, a second information signal layer 45 and a second substrate 42a are laminated in this order is prepared. The second substrate 42a is the same as a second substrate 42 in the fourth embodiment except that the structures 11 are not formed in one principal surface and a smooth surface is formed therein.

Next, as illustrated in Fig. 18C, a photosensitive resin such as an ultraviolet curable resin is applied to the reading surface of the optical information recording medium according to, for example, the spin coat method. Next, the reading surface forming master 201 is pressed against the ultraviolet curable resin to radiate with light such as an ultraviolet ray and solidify. By this means, as illustrated in Fig. 18D, a plurality of structures 11 is formed in the reading surface of the optical information recording medium.

According to the above procedure, a target optical information recording medium is obtained.

According to the sixth embodiment, in final procedure of the procedure of manufacturing the optical information recording medium, a plurality of structures 11 is formed in the reading surface, so that it is possible to make an optical information recording medium which has a good antireflection property without substantially changing a manufacturing line of conventional optical information recording media.

<7. Seventh Embodiment>

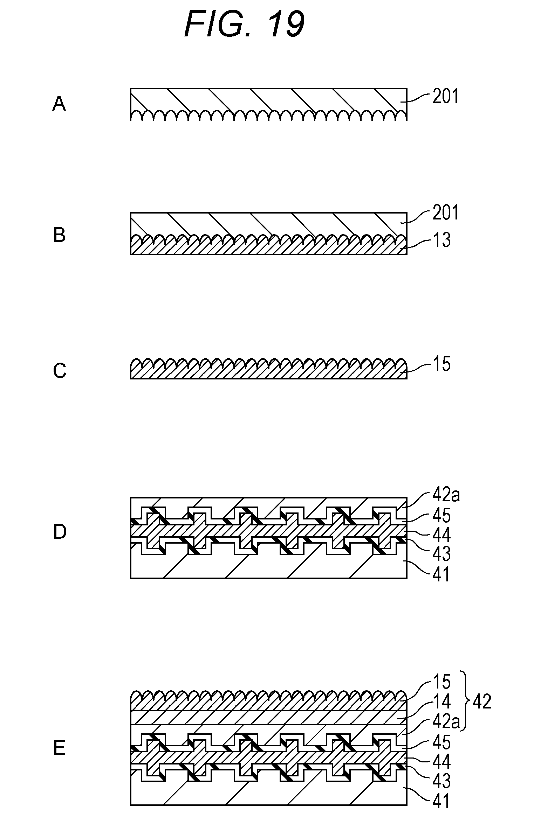

Figs. 19A to 19E are procedure diagrams for explaining an example of a method of manufacturing an optical information recording medium according to a seventh embodiment of the present invention. The seventh embodiment of the present invention differs from the sixth embodiment in forming a plurality of structures 11 in a reading surface by laminating a compact 15 in which a plurality of structures 11 is formed, on the reading surface of the optical information recording medium. In addition, the same portions of the seventh embodiment as those of the sixth embodiment will be assigned the same reference numerals.

First, as illustrated in Fig. 19A, a reading surface forming master 201 is prepared. Next, as illustrated in Fig. 19B, the reading surface forming master 201 is pressed against a resin material 13 to transfer the shape of the reading surface forming master 201 to the resin material 13. For a transferring method, for example, optical transfer such as UV transfer or thermal transfer can be used. By this means, as illustrated in Fig. 19C, the compact 15 in which the structures 11 are formed in one principal surface is obtained. The shape of the compact 15 is, for example, a sheet shape or a flat shape. The resin material 13 is, for example, an ultraviolet curable resin, a thermosetting resin or a thermoplastic resin.

Next, as illustrated in Fig. 19D, an optical information recording medium in which a first substrate 41, a second information signal layer 43, an intermediate layer 44, a second information signal layer 45 and a second substrate 42a are laminated in this order is prepared. Next, as illustrated in Fig. 19E, the compact 15 is laminated to the reading surface of the optical information recording medium across a laminating layer 14.

According to the above procedure, a target optical information recording medium is obtained.

According to the seventh embodiment, in final procedure of the procedure of manufacturing the optical information recording medium, a plurality of structures 11 is formed in the reading surface, so that it is possible to provide the same effect as that of the sixth embodiment.

<8. Eighth Embodiment>

(Configuration of Optical Information Recording Medium)

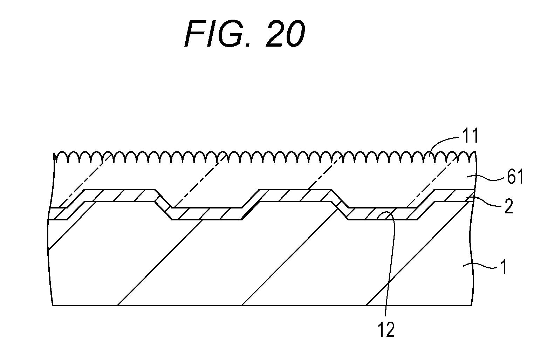

Fig. 20 is a cross sectional view illustrating an example of a configuration of an optical information recording medium according to an eighth embodiment of the present invention. The optical information recording medium has a substrate 1, an information signal layer 2 formed on the substrate 1 and a protective layer 61 formed on the information signal layer 2. In the surface of the protective layer 61, a plurality of structures 11 having convex shapes is formed. The same portions of the eighth embodiment as those of the first embodiment will be assigned the same reference numerals, and will not be described.

In this optical information recording medium, an information signal is recorded or played back by radiating laser light on the information signal layer 2 from a protective layer 61 side which is an optical transmission layer. For example, an objective lens having the numerical aperture of 0.84 or more and 0.86 or less condenses laser light having the wavelength of 400 nm or more and 410 nm or less, and radiates the laser light on the information signal layer 2 from the protective layer 61 side, so that an information signal is recorded or played back. Such an optical information recording medium is, for example, a BD (Blu-ray Disc (registered trademark)).

When an optical information recording medium is compliant with a BD standard, an arrangement pitch of the structures 11 is preferably 470 nm or less, is more preferably 150 nm or more and 350 nm or less, and is still more preferably 200 nm or more and 315 nm or less. When the arrangement pitch exceeds 470 nm, about 407 nm which is a value obtained by multiplying 470 with √3/2 corresponds to a dimension value which is the nearest effective diffraction grating interval in case of a hexagonal lattice arrangement, and a rapid rise in the reflectivity in a region having this wavelength or less is observed and the reflectivity exceeds 1%, and therefore the antireflection effect becomes insufficient.

The height of the structures 11 is preferably 80 nm or more and 200 nm or less, is more preferably 100 nm or more and 160 nm or less, and is still 110 nm or more and 145 nm or less. When the height is less than 80 nm, the reflectivity exceeds 1%, and the antireflection effect becomes insufficient. Meanwhile, when the height exceeds 200 nm, while antireflection performance is still sufficient, the height of the structures 11 increases, and therefore it is difficult to make the structures.

A flat portion diameter of a top of the structures 11 is preferably 0 fold or more and 0.7 folds or less of an arrangement pitch or greater than 0 fold and 0.7 folds or less of the arrangement pitch, is more preferably 0.2 folds or more and 0.5 folds or less of the arrangement pitch and is still more preferably 0.3 folds or more and 0.4 folds or less. When the flat portion diameter exceeds 0.7 folds, the reflectivity exceeds 1%, and the antireflection effect becomes insufficient.

The ratio ($\lambda$/H) of a wavelength $\lambda$ of light for recording or playing back an information signal to a height H of the structures 11 is preferably 2 or more and 6 or less. When the ratio is less than 2, while the antireflection performance is still sufficient, the heights of the structures 11 increase, and therefore it is difficult to make the structures. Meanwhile, when the ratio exceeds 6, the reflectivity exceeds 1%, and the antireflection effect becomes insufficient.

The protective layer 61 which is an optical transmission layer is formed with, for example, an optical transmission sheet which has an annular shape and an adhesive layer which laminates this optical transmission sheet to the substrate 1. The optical transmission sheet is preferably made of a material of low absorption capacity with respect to laser light used for recording and/or playback, and, more specifically, is preferably made of a material of 90% or more of the transmittance. The material of the optical transmission sheet is, for example, a polycarbonate resin material or a polyolefin resin (for example, ZEONEX (registered trademark)). The thickness of the optical transmission sheet is preferably selected to be 0.3 mm or less and is more preferably selected to be in a range of 3 $\mu$m to 177 $\mu$m. The adhesive layer is made of, for example, an ultraviolet curable resin or a pressure sensitive adhesive (PSA). Further, the protective layer 61 may be formed with a resin cover which is formed by solidifying a photosensitive resin such as a UV resin. A material of the resin cover is, for example, an acrylic resin of an ultraviolet curable type.

The thickness of the protective layer 61 is preferably selected to be in a range of 10 $\mu$m to 177 $\mu$m, and is, for example, selected to be 100 $\mu$m. By combining this thin protective layer 61 and the objective lens with a high numerical aperture of, for example, about 0.85, it is possible to realize high density recording.

(Method of Manufacturing Optical Information Recording Medium)

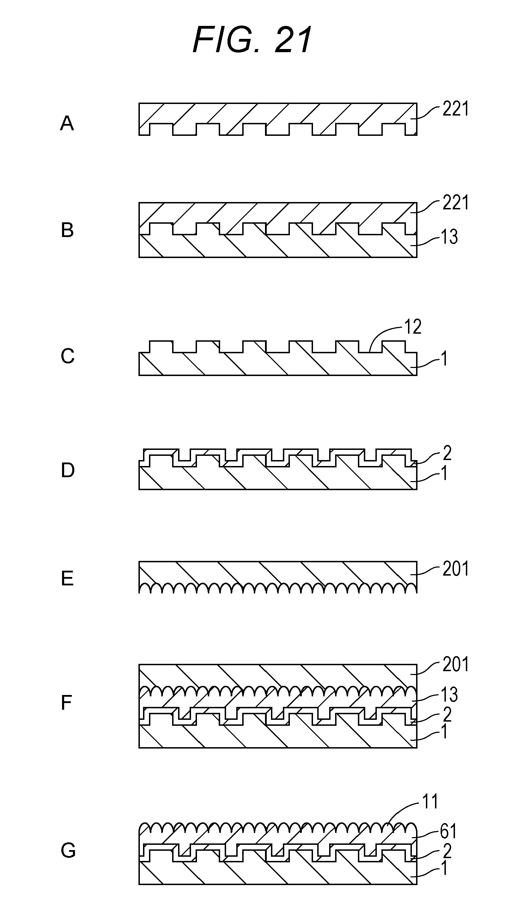

Figs. 21A to 21G are procedure diagrams for explaining an example of a method of manufacturing the optical information recording medium according to the eighth embodiment of the present invention.

(Transferring Procedure)

First, as illustrated in Fig. 21A, the signal surface forming master 221 is prepared. Next, as illustrated in Fig. 21B, according to, for example, an injection molding method, the shape of the signal surface forming master 221 is transferred to the resin material 13. By this means, as illustrated in Fig. 21C, the first substrate 1 in which concave-convex portions 12 are formed in one principal surface is obtained.

(Information Signal Layer Forming Procedure)

Next, as illustrated in Fig. 21D, the information signal layer 2 is formed on the concave-convex portions 12 of the substrate 1 using, for example, a spattering method or a spin coat method.

(Transferring Procedure)

Next, as illustrated in Fig. 21E, a reading surface forming master 201 is prepared. Next, as illustrated in Fig. 21F, the resin material 13 such as an ultraviolet curable resin is applied to the information signal layer 2 of the substrate 1 according to, for example, a spin coat method. Next, the reading surface forming master 201 is pressed against this resin material 13 and an ultraviolet ray or the like is radiated on the resin material 13 to solidify. By this means, as illustrated in Fig. 21G, an optical information recording medium in which a plurality of structures 11 is formed in the reading surface is obtained.

<9. Ninth Embodiment>

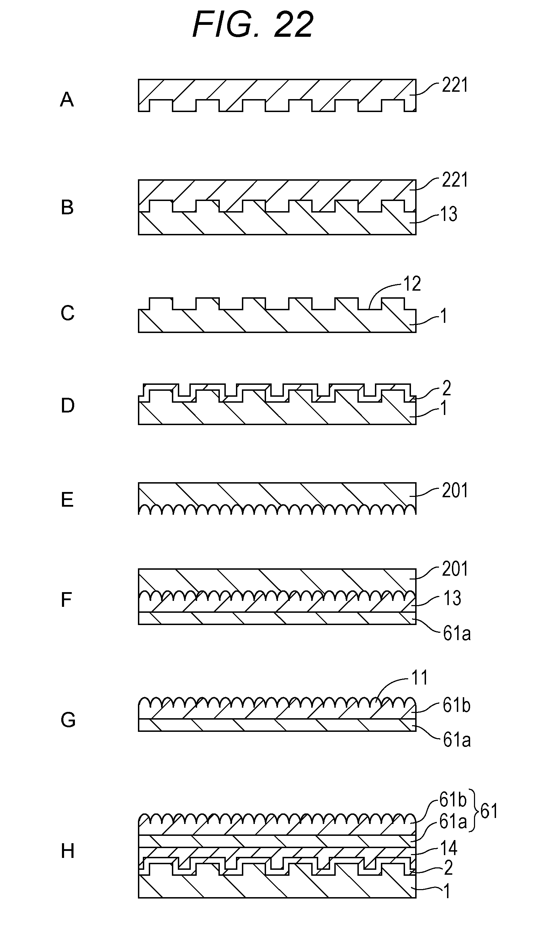

Figs. 22A to 22H are procedure diagrams for explaining an example of a method of manufacturing the optical information recording medium according to a ninth embodiment of the present invention.
First, as illustrated in Figs. 22A to 22D, a substrate 1 in which an information signal layer 2 is formed on concave-convex portions 12 is made similar to the eighth embodiment. Next, as illustrated in Fig. 22E, a reading surface forming master 201 is prepared. Next, a resin material 13 such as an ultraviolet curable resin is applied on a base 61a according to, for example, a spin coat method. The shape of the base 61a is, for example, a sheet shape. Next, as illustrated in Fig. 22F, the reading surface forming master 201 is pressed against this resin material 13 and an ultraviolet ray or the like is radiated on the resin material 13 to solidify. By this means, as illustrated in Fig. 22G, an antireflection layer 61b which has multiple structures 11 on one principal surface of the base 61a is formed. Next, as illustrated in Fig. 22H, a smooth surface of the base 61a and a signal surface of the substrate 1 are laminated across a laminating layer 14. By this means, an optical information recording medium in which a plurality of structures 11 is formed in the reading surface is obtained.

<10. Tenth Embodiment>

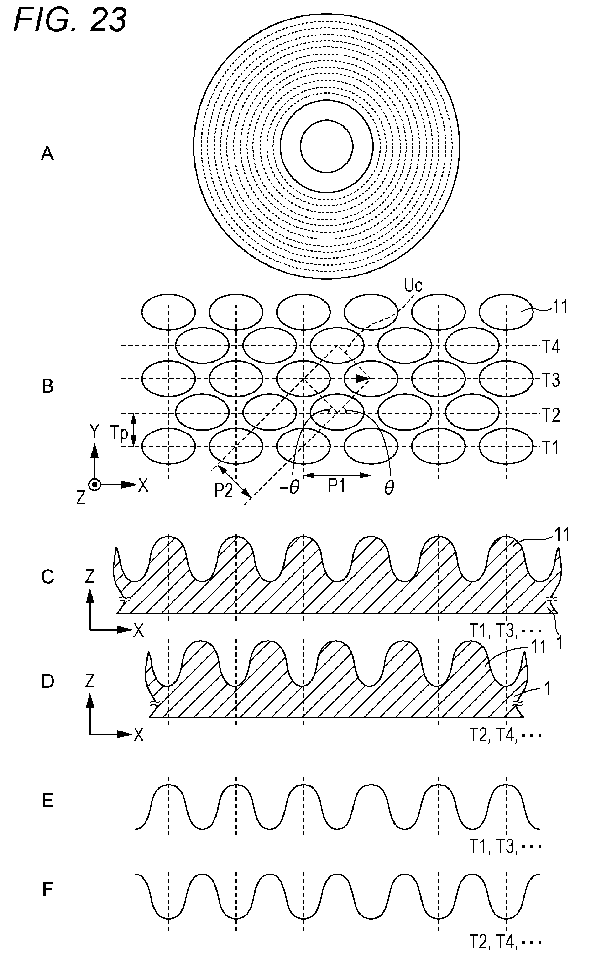

Fig. 23A is a schematic plan view illustrating an example of a configuration of a reading surface of an optical information recording medium according to a tenth embodiment of the present invention. Fig. 23B is a plan view enlarging part of the reading surface of the optical information recording medium illustrated in Fig. 23A. Fig. 23C is a cross sectional view in tracks T1, T3 and ... in Fig. 23B. Fig. 23D is a cross sectional view in tracks T2, T4 and ... in Fig. 23B. Fig. 23E is a schematic diagram illustrating a modulated waveform of laser light used to form latent images corresponding to the tracks T1, T3 and ... in Fig. 23B. Fig. 23F is a schematic diagram illustrating a modulated waveform of laser light used to form latent images corresponding to tracks T2, T4 and ... in Fig. 23B.
An optical information recording medium according to the fourth embodiment differs from that of the first embodiment in that each of the structures 11 forms a square lattice pattern or a semi-square lattice pattern between three neighboring arrays of tracks.
An arrangement pitch P1 of the structures 11 in the same track is preferably longer than an arrangement pitch P2 of the structures 11 between two neighboring tracks. When an arrangement pitch of the structures 11 in the same track is P1 and an arrangement pitch of the structures 11 between two neighboring tracks is P2, P1/P2 preferably satisfies a relationship of $1.4 < P1/P2 \leq 1.5$. By setting this numerical value range, it is possible to improve the packing rate of the structures 11 having the elliptic conical shapes or elliptic truncated conical shapes and, consequently, improve the antireflection property. Further, the height or the depth of the structures 11 in a 45 degree direction or an about 45 degree direction with respect to the tracks is preferably smaller than the height or the depth of the structures 11 in a track extending direction.
A height H2 of the structures 11 in an alignment direction ($\theta$ direction) which is oblique with respect to the track extending direction is preferably smaller than a height H1 of the structures 11 in the track extending direction. That is, the heights H1 and H2 of the structures 11 preferably satisfy the relationship of $H1 > H2$.
When the structures 11 form the square lattice or semi-square lattice pattern, an ellipticity e of a structure bottom surface is preferably $150\% \leq e \leq 180\%$. This is because, by setting this range, it is possible to improve the packing rate of the structures 11 and obtain the good antireflection property.
The packing rate of the structures 11 on the base surface has an upper limit of 100%, and is in a range of 65% or more, preferably 73% or more and more preferably 86% or more. By setting this range of the packing rate, it is possible to improve the antireflection property.
Meanwhile, the packing rate (average packing rate) of the structures 11 is a value calculated as follows.
First, an image of the surface of the optical information recording medium is captured from a top view using a scanning electron microscope (SEM). Next, a unit cell Uc is selected at random from the captured SEM picture to measure the arrangement pitch P1 of the unit cell Uc and the track pitch Tp (see Fig. 23B). Further, an area S of the bottom surface of one of the four structures 11 included in this unit cell Uc is measured by image processing. Next, the packing rate is calculated according to the following equation (2) using the measured arrangement pitch P1, the track pitch Tp and the bottom surface area S.

```
Packing rate = (S(tetra)/S(unit)) × 100 ... (2)


Unit cell area: S(unit) = 2×((P1×Tp)×(1/2)) = P1×Tp

Area of bottom surface of structure existing in unit cell:

S(tetra) = S
```

The above processing of calculating the packing rate is performed for ten unit cells selected at random from the captured SEM picture. Further, by simply averaging (taking an arithmetic average of) measurement values, the average rate of the packing rates is calculated as the packing rate of the structures 11 on the base surface.

The ratio ((2 × 2r)/P1 × 100) which is two times as a diameter 2r to the arrangement pitch P1 is 127% or more, is preferably 137% or more and is more preferably 146% or more. By setting this range, it is possible to improve the packing rate of the structures 11 and improve the antireflection property. Meanwhile, the arrangement pitch P1 is an arrangement pitch of the structures 11 in the track direction, and the diameter 2r is the diameter of a structure bottom surface in the track direction. In addition, when the structure bottom surface is circular, the diameter 2r is the diameter, and, when the structure bottom surface is elliptic, the diameter 2r is the long diameter.

<11. Eleventh Embodiment>

[Configuration of Optical Information Recording Medium]

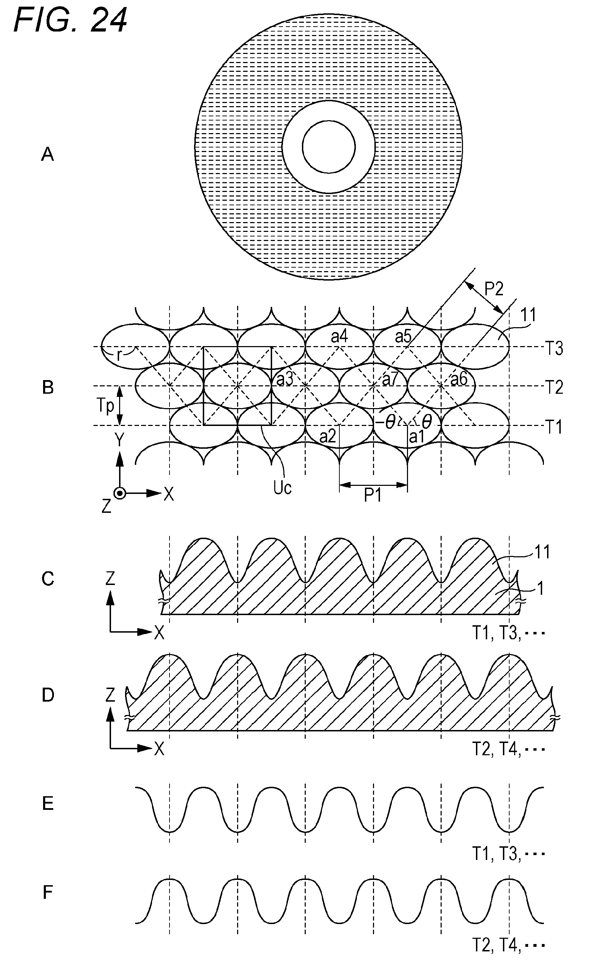

Fig. 24A is a schematic plan view illustrating an example of a configuration of a reading surface of an optical information recording medium according to an eleventh embodiment of the present invention. Fig. 24B is a plan view enlarging part of a reading surface of the optical information recording medium illustrated in Fig. 24A. Fig. 24C is a cross sectional view in tracks T1, T3 and ... in Fig. 24B. Fig. 24D is a cross sectional view in tracks T2, T4 and ... in Fig. 24B. Fig. 24E is a schematic diagram illustrating a modulated waveform of laser light used to form latent images corresponding to the tracks T1, T3 and ... in Fig. 24B. Fig. 24F is a schematic diagram illustrating a modulated waveform of laser light used to form latent images corresponding to tracks T2, T4 and ... in Fig. 24B.

The optical information recording medium according to the eleventh embodiment differs from that of the first embodiment in linearly aligning structures 11 to form a plurality of tracks.

[Configuration of Reading Surface Forming Master]

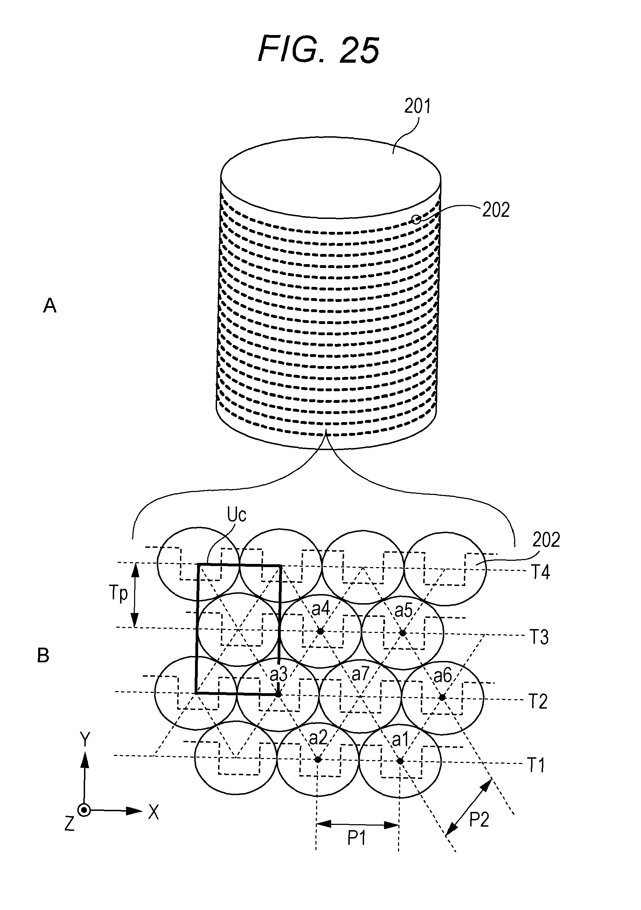

Fig. 25A is a schematic perspective view illustrating an example of a configuration of a molding surface of a reading surface forming master for forming above mentioned structures on a reading surface. Fig. 25B is a plan view enlarging part of the molding surface of the reading surface forming master illustrated in Fig. 25A. The reading surface forming master 201 has a configuration in which multiple structures 202 which are concave portions are arranged on the surface of the reading surface forming master. The reading surface forming master 201 has a columnar or cylindrical shape. Although, for example, glass can be used for a material of the reading surface forming master 201, this material is not limited in particular. By spatially linking two dimensional patterns using a roll master exposure device described below, synchronizing a polarity inversion formatter signal and a rotation controller of a recording device per one track, generating a signal and performing patterning at an adequate feed pitch using CAV, it is possible to record a hexagonal lattice pattern or a semi-hexagonal lattice pattern. By adequately setting the frequency of the polarity inversion formatter signal and the number of rotations of roll, it is possible to form a lattice pattern of a uniform spatial frequency in a desired recording region.

[Configuration of Exposure Device]

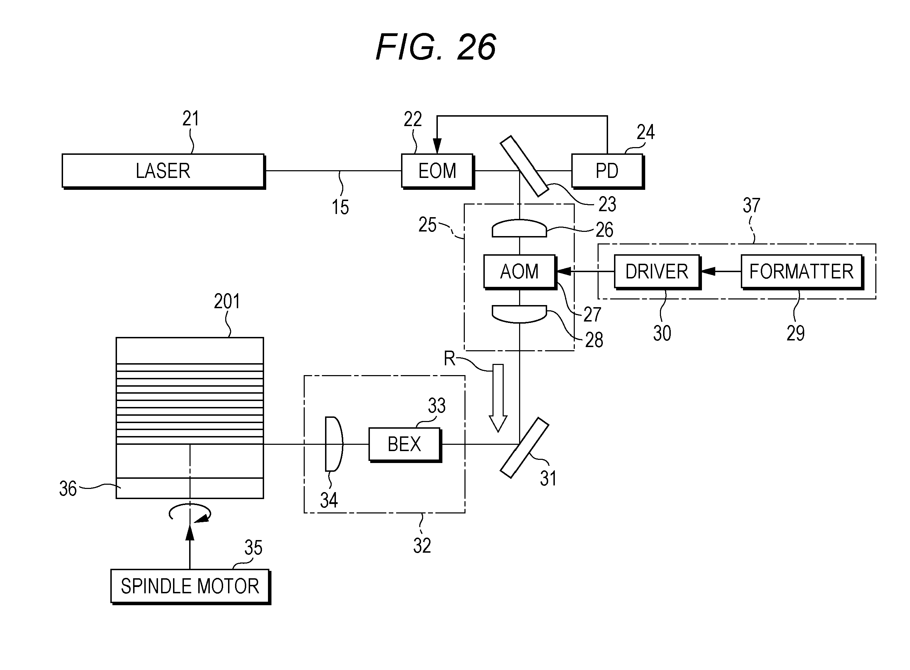

A configuration of the master exposure device used for procedure of exposing a moth-eye pattern will be described with reference to Fig. 26. This master exposure device is formed based on an optical disk recording device.

A laser light source 21 is a light source which exposes a resist deposited on a surface of a master 201 as a recording medium, and oscillates recording laser light 15 of, for example, a wavelength λ = 266 nm. The laser light 15 emitted from the laser light source 21 travels straightforward as a parallel beam, and is incident on an electro optical modulator (EOM) 22. The laser light 15 having transmitted through the electro optical modulator 22 is reflected by a mirror 23, and is guided to a modulating optical system 25.

The mirror 23 is formed with a polarized beam splitter, and has a function of reflecting one polarization component and allowing transmission of the other polarization component. The polarization component having transmitted through the mirror 23 is received by a photodiode 24, and the electro optical modulator 22 is controlled based on this received light signal to modulate the phase of the laser light 15.

In the modulating optical system 25, the laser light 15 is condensed on an acousto-optic modulator (AOM) 27 made of glass ($SiO_2$) or the like by a condenser lens 26. The intensity of the laser light 15 is modulated by the acousto-optic modulator 27, and the laser light is spread and converted into a parallel beam by a lens 28. The laser light 15 emitted from the modulating optical system 25 is reflected by a mirror 31, and is guided horizontally and in parallel on a moving optical table 32.

The moving optical table 32 has a beam expander 33 and an objective lens 34. The laser light 15 guided to the moving optical table 32 is shaped into a desired beam shape by the beam expander 33, and then is radiated on the resist layer on the master 12 through the objective lens 34. The master 12 is set on a turn table 36 connected to a spindle motor 35. Further, by rotating the master 12, guiding the laser light 15 in a height direction of the master 12 and intermittently radiating the laser light 15 on the resist layer, procedure of exposing the resist layer is performed. A formed latent image has a virtually elliptic shape which has a long axis in a circumferential direction. The laser light 15 is moved by moving the moving optical table 32 in an arrow R direction.

The exposure device has a control mechanism 37 which forms on the resist layer a latent image corresponding to a two dimensional pattern of a hexagonal lattice or a semi-hexagonal lattice. The control mechanism 37 has a formatter 29 and a driver 30. The formatter 29 has a polarity inverting unit, and this polarity inverting unit controls a timing to radiate the laser light 15 on the resist layer. The driver 30 receives an output from the polarity inverting unit, and controls the acousto-optic modulator 27.

This roll master exposure device generates a signal by synchronizing a polarity inversion formatter signal and the rotation controller of the recording device per one track such that two dimensional patterns are spatially linked, and the acousto-optic modulator 27 modulates the intensity. By performing patterning at a constant angular velocity (CAV), at an adequate modulation frequency, at an adequate feed pitch and with the adequate number of rotations, it is possible to record a hexagonal lattice or semi-hexagonal lattice pattern. For example, the feed pitch only needs to be set to 251 nm to set a cycle in the circumferential direction to 315 nm and set the cycle in an about 60 degree direction (about -60 degree direction) with respect to the circumferential direction to 300 nm (the Pythagorean theorem). The frequency of the polarity inversion formatter signal is changed by the number of rotations of roll (1800 rpm, 900 rpm and 450 rpm). The semi-hexagonal lattice pattern in which the spatial frequency (a circle 315 nm cycle, and a circumferential direction about 60 degree direction (about -60 degree direction) 300 nm cycle) in a desired recording region is uniform is obtained by expanding far ultraviolet laser light to a five-fold beam diameter by the beam expander (BEX) 33 on the moving optical table 32, radiating the laser light on the resist layer on the master 12 through the objective lens 34 of a numerical aperture (NA) 0.9 and forming a fine latent image.

[Method of Manufacturing Optical Information Recording Medium]

An optical information recording medium employing the above configuration is made, for example, as follows using the reading surface forming master 201.

First, a photosensitive resin such as an ultraviolet curable resin is applied to a sheet. Next, while the reading surface forming master 201 is rotated, this molding surface is pressed against the photosensitive resin applied to the sheet, and light such as an ultraviolet ray is radiated on the photosensitive resin from the sheet side to solidify the photosensitive resin. Then, while rotation of the reading surface forming master 201 is maintained, the molding surface is peeled from the solidified photosensitive resin. By this means, a plurality of linearly aligning structures 11 is formed in one principal surface of the sheet. Next, this sheet is annularly punched, and the punched annular sheet is laminated on an information signal layer formed on the substrate across the laminating layer made of an ultraviolet curable resin, a pressure sensitive adhesive or the like.

According to the above procedure, a target optical information recording medium is obtained.

<12. Twelfth Embodiment>

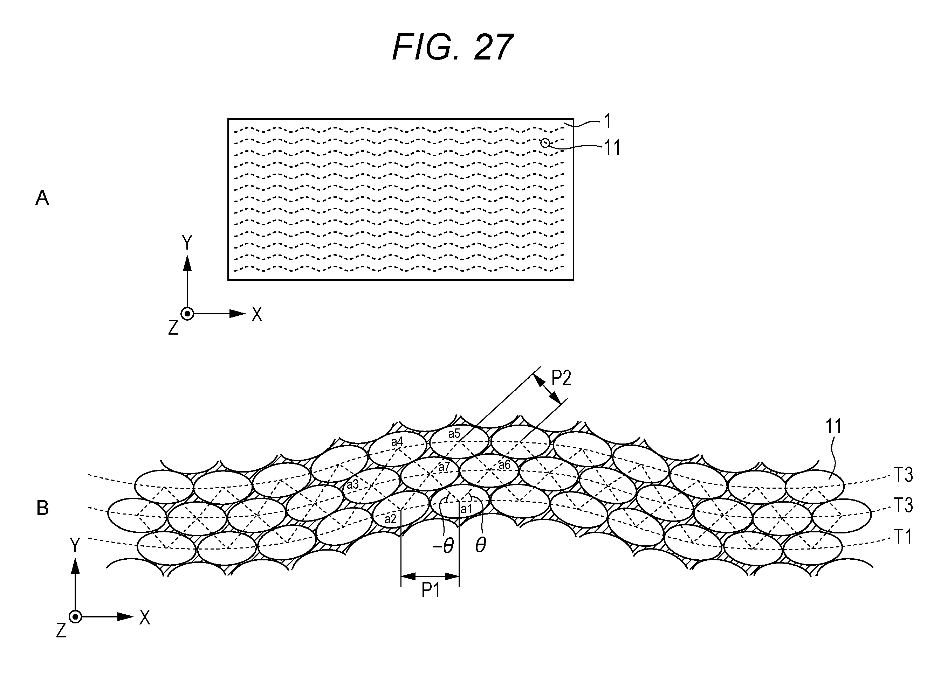

Fig. 27A is a schematic plan view illustrating part of a reading surface of an optical information recording medium according to a twelfth embodiment of the present invention. Fig. 27B is a plan view enlarging part of the reading surface of the optical information recording medium illustrated in Fig. 27A.

The optical information recording medium according to the twelfth embodiment differs from that of the first embodiment in aligning structures 11 on wobbling tracks (hereinafter referred to as "wobble tracks"). A wobble of each track on the base 2 is preferably synchronized. That is, the wobbles are synchronized wobbles. By synchronizing the wobbles in this way, it is possible to maintain a unit cell shape of a hexagonal lattice or a semi-hexagonal lattice, and keep a high packing rate. The wave shapes of the wobble tracks are, for example, sine curves or triangular waves. The wave shapes of the wobble tracks are not limited to cyclic wave shapes, and may be noncyclic wave shapes. A wobble amplitude of the wobble track is, for example, selected to about $\pm 10$ μm.

This twelfth embodiment is the same as the first embodiment except the above.

In the twelfth embodiment, the structures 11 are aligned on the wobble tracks, so that it is possible to suppress unevenness of an outlook.

<13. Thirteenth Embodiment>

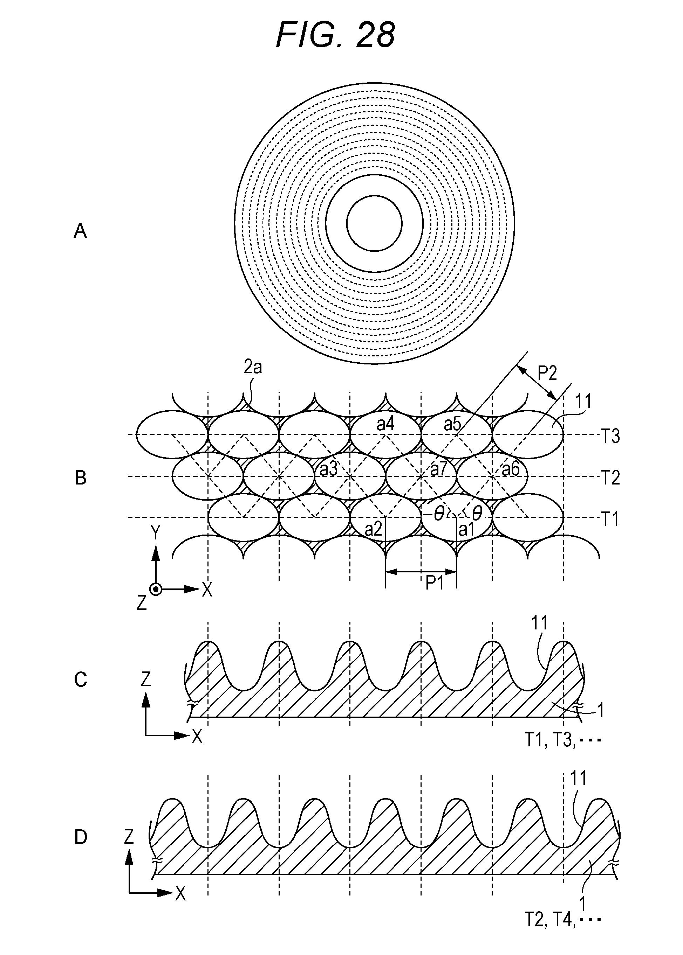

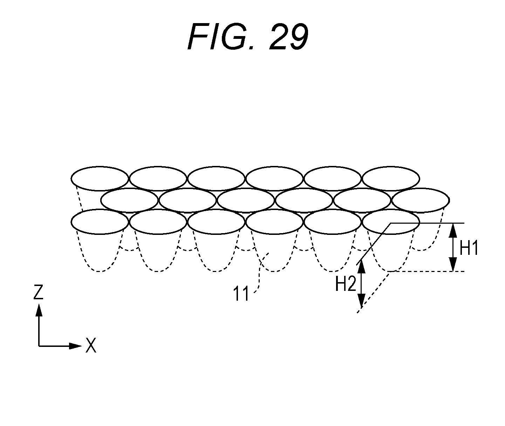

Fig. 28A is a schematic plan view illustrating an example of a configuration of an optical information recording medium according to a thirteenth embodiment of the present invention. Fig. 28B is a plan view enlarging part of the optical information recording medium illustrated in Fig. 28A. Fig. 28C is a cross sectional view in tracks T1, T3 and ... in Fig. 28B. Fig. 28D is a cross sectional view in tracks T2, T4 and ... in Fig. 28B. Fig. 29 is a perspective view enlarging part of the optical information recording medium illustrated in Fig. 28B.

An optical information recording medium 1 according to the thirteenth embodiment differs from the first embodiment in aligning multiple structures 11 having concave shapes on a base surface. The shapes of these structures 11 are concave shapes obtained by inverting convex shapes of the structures 11 in the first embodiment. In addition, when the structures 11 are concave portions as described above, an opening portion (inlet portion of a concave portion) of the structures 11 which is a concave portion is defined as a lower portion, and a lowermost portion of the substrate 1 in a depth direction (a depthmost portion of a concave portion) is defined as a top. That is, the structures 11 which are nonentity space define the top and the lower portion. Further, in the thirteenth embodiment, the structures 11 are the concave portion, and a height H of the structures 11 in equation (1) is a depth H of the structures 11.

This thirteenth embodiment is the same as the first embodiment except the above.

In this thirteenth embodiment, the shapes of the structures 11 having the convex shapes in the first embodiment are inverted to concave shapes, so that it is possible to provide the same effect as that of the first embodiment.

[Examples]

Although the present invention will be specifically described below based on examples, the present invention is not limited only to these examples.

(Example 1)

First, a signal surface forming stamper (nickel stamper) which records an information signal compliant with the CD standard, and a reading surface forming stamper in which the following subwavelength structures are formed in a region (the radius of 20 mm to 59 mm) corresponding to a signal region of this signal surface forming stamper were prepared.

Structure pitch (inter-structure center distance) About 300 nm

Structure height: About 250 nm

Structure arrangement pattern: Semi-hexagonal lattice arrangement

Structure shape: Elliptic truncated conical shape

Next, the signal surface forming stamper was attached to one mold of an injection molding device, the reading surface forming stamper was attached to the other mold and this injection molding device was used to transfer the shapes of the stampers to a resin material. By this means, a polycarbonate substrate (referred to as a "PC substrate" below) which had a signal surface on which a concave-convex pattern was formed and a reading surface on which subwavelength structure patterns were formed, and which had the thickness of 1.2 mm was obtained.

Next, according to the spattering method, an aluminum film (reflection film) was formed on the signal surface of this substrate. Next, by applying and solidifying an ultraviolet curable resin on the aluminum film according to the spin coat method, a protective film was formed. By this means, an optical disk which had desired subwavelength structures in a reading surface and which was compliant with the CD standard was obtained.

(Example 2)

First, the same signal surface forming stamper and reading surface forming stamper as those in Example 1 were prepared. Next, the signal surface forming stamper was attached to one mold of an injection molding device, the other mold was formed as a mirror surface (flat surface) without being attached a stamper and this injection molding device was used to transfer the shape of the stamper to a resin material. By this means, a first PC substrate which had a signal surface on which a concave-convex pattern was formed and a flat surface, and which had a thickness of 0.6 mm was obtained. Next, the reading surface forming stamper was attached to one mold of an injection molding device, the other mold was formed as a mirror surface (flat surface) without being attached a stamper and this injection molding device was used to transfer the shape of the stamper to a resin material. By this means, a second PC substrate which had a reading surface on which subwavelength structure patterns were formed and a flat surface, and which had a thickness of 0.6 mm was obtained.

Next, by laminating the flat surfaces of the first and second substrates by an ultraviolet curable resin, a substrate which had a signal surface in which the concave-convex pattern was formed in one principal surface and a reading surface on which a plurality of subwavelength structure patterns was formed on the other principal surface was made. Next, according to the spattering method, an aluminum film (reflection film) was formed on the signal surface of this substrate. Next, by applying and solidifying an ultraviolet curable resin on the aluminum film according to the spin coat method, a protective film was formed. By this means, an optical disk which had desired subwavelength structures in a reading surface and which was compliant with the CD standard was obtained.

(Example 3)

First, a signal surface forming stamper (nickel stamper) which recorded an information signal compliant with the DVD-SL (DVD-Single Layer) standard, and a reading surface forming stamper in which the same subwavelength structures as those in Example 1 were formed in a region (the radius of 20 mm to 59 mm) corresponding to a signal region of this signal surface forming stamper were prepared.

Next, the signal surface forming stamper was attached to one mold of an injection molding device, the reading surface forming stamper was attached to the other mold and this injection molding device was used to transfer the shapes of the stampers to a resin material. By this means, a second PC substrate which had a signal surface on which a concave-convex pattern was formed and a reading surface on which subwavelength structure patterns were formed, and which had a thickness of 0.6 mm was obtained. Next, according to the spattering method, an aluminum film (reflection film) was formed on the signal surface of this second substrate.

Next, a stamper in which a signal region of the DVD-SL signal surface forming stamper was a flat surface (mirror) was prepared. Next, this stamper was attached to one mold of an injection molding device, the other mold was formed as a mirror surface (flat surface) without being attached a stamper and this injection molding device was used to transfer the shape of the stamper to a resin material. By this means, a first PC substrate both surfaces of which were flat surfaces was obtained.

Next, the signal surface of the first substrate and the flat surface of the second substrate were laminated by an ultraviolet curable resin. By this means, an optical disk which had desired subwavelength structures in a reading surface and which was compliant with the DVD-SL standard was obtained.

(Example 4)

First, a L0 layer signal surface forming stamper (nickel stamper) which recorded an information signal compliant with a L0 layer standard of DVD-DL (DVD-Dual Layer), and a reading surface forming stamper in which the same subwavelength structures as those in Example 1 were formed in a region (the radius of 20 mm to 59 mm) corresponding to a signal region of this signal surface forming stamper were prepared.

Next, the L0 layer signal surface forming stamper was attached to one mold of an injection molding device, the reading surface forming stamper was attached to the other mold and this injection molding device was used to transfer the shapes of the stampers to a resin material. By this means, a second PC substrate which had a signal surface on which a concave-convex pattern was formed and a reading surface on which subwavelength structure patterns were formed, and which had a thickness of 0.6 mm was obtained. Next, according to the spattering method, a silicon film or a silver alloy film (semi-transmission reflection film) was formed on the signal surface of this second PC substrate.

Next, a L1 layer signal surface forming stamper (nickel stamper) which recorded an information signal compliant with the L1 layer standard of DVD-DL was prepared. Next, the L1 layer signal surface forming stamper was attached to one mold of an injection molding device, the other mold was formed as a mirror surface (flat surface) without being attached a stamper and this injection molding device was used to transfer the shape of the stamper to a resin material. By this means, a first PC substrate which had a signal surface on which a concave-convex pattern was formed and a flat surface, and which had a thickness of 0.6 mm was obtained. Next, according to the spattering method, an aluminum film or a silver alloy film (total reflection film) was formed on the signal surface of this first PC substrate.

Next, the signal surfaces of the first substrate and the second substrate were laminated by an ultraviolet curable resin. By this means, an optical disk which had desired subwavelength structures in a reading surface and which was compliant with the DVD-DL standard was obtained.

(Example 5)

First, a signal surface forming stamper (nickel stamper) which recorded an information signal compliant with the SACD-HD (SACD-Hybrid) standard, and a reading surface forming stamper in which the same subwavelength structures as those in Example 1 were formed in a region (the radius of 20 mm to 59 mm) corresponding to a signal region of this signal surface forming stamper were prepared.

Next, the SACD layer signal surface forming stamper was attached to one mold of an injection molding device, the other mold was formed as a mirror surface (flat surface) without being attached a stamper and this injection molding device was used to transfer the shape of the stamper to a resin material. By this means, a first PC substrate which had a signal surface on which a concave-convex pattern was formed and a flat surface, and which had a thickness of 0.6 mm was obtained. Next, according to the spattering method, a silicon film or a silver alloy film (semi-transmission reflection film) was formed on the signal surface of this first PC substrate.

Next, a CD layer signal surface forming stamper (nickel stamper) which recorded an information signal compliant with the CD layer standard of SACD-HD was prepared. Next, the CD layer signal surface forming stamper was attached to one mold of an injection molding device, the other mold was formed as a mirror surface (flat surface) without being attached a stamper and this injection molding device was used to transfer the shape of the stamper to a resin material. By this means, a second PC substrate which had a signal surface on which a concave-convex pattern was formed and a flat surface, and which had a thickness of 0.6 mm was obtained. Next, according to the spattering method, an aluminum film or a silver alloy film (total reflection film) was formed on the signal surface of this second PC substrate. Next, by applying and solidifying an ultraviolet curable resin on the aluminum film according to the spin coat method, a protective film was formed.

Next, the signal surface of the first PC substrate and the flat surface of the second PC substrate were laminated by an ultraviolet curable resin. By this means, an optical disk which had desired subwavelength structures in a reading surface and which was compliant with the SACD-HD standard was obtained.

(Example 6)

Next, a L0 layer signal surface forming stamper (nickel stamper) which recorded an information signal compliant with the L0 layer standard of DVD-DL (DVD-Dual Layer) was prepared. Next, the L0 layer signal surface forming stamper was attached to one mold of an injection molding device, the other mold was formed as a mirror surface (flat surface) without being attached a stamper and this injection molding device was used to transfer the shape of the stamper to a resin material. By this means, a second PC substrate which had a signal surface on which a concave-convex pattern was formed and a flat surface, and which had a thickness of 0.6 mm was obtained.

Next, a reading surface forming stamper in which the same subwavelength structures as those in Example 1 were formed was prepared. Next, according to the spin coat method, an ultraviolet curable resin corresponding to the thickness of at least the heights of the subwavelength structures or more was applied to the flat surface of the second PC substrate. Next, the reading surface forming stamper was pressed against this ultraviolet curable resin, the ultraviolet curable resin was radiated by an ultraviolet ray from the signal surface side of the second substrate and was solidified, and the stamper was peeled off. By this means, a plurality of subwavelength structures was formed on the reading surface side of the second substrate. In subsequent procedure, similar to above Example 4, an optical disk which had desired subwavelength structures in a reading surface and which was compliant with the DVD-DL standard was obtained.

(Example 7)

First, an optical disk compliant with the DVD-DL standard was prepared. Next, a reading surface forming quartz stamper (thickness 0.7 to 1.2 mm) in which the same subwavelength structures as those in Example 1 ware formed was prepared. Next, according to the spin coat method, an ultraviolet curable resin corresponding to the thickness of at least the heights of the subwavelength structures or more (400 nm or more) was applied to the reading surface of the optical disk. Next, the reading surface forming stamper was pressed against this ultraviolet curable resin, the ultraviolet curable resin was radiated with an ultraviolet ray from a back surface of the quartz stamper and was solidified, and a plurality of subwavelength structures was formed in the reading surface of the optical disk. By this means, an optical disk which had desired subwavelength structures in a reading surface and which was compliant with the DVD-DL standard was obtained.

In addition, although a case that the quartz stamper is used has been described as an example in this Example 7, a transparent substrate made by way of molding transfer using a nickel stamper may also be used instead of a quartz stamper. Further, a subwavelength structure forming method used in this Example 7 is not limited to DVD-DL, and is applicable to optical disks of various standards such as a CD and a BD.

(Example 8)

First, an optical disk compliant with the DVD-DL standard was prepared. Next, a reading surface forming quartz stamper (thickness 0.7 to 1.2 mm) in which the same subwavelength structures as those in Example 1 were formed was prepared. Next, an ultraviolet curable resin corresponding to the thickness of the heights of the subwavelength structures or more (400 nm or more) was applied to a film base of about 0.1 mm made of polycarbonate, PMMA or PET. Next, the quartz stamper was pressed against the ultraviolet curable resin, the ultraviolet curable resin was radiated with an ultraviolet ray from the back surface side of the quartz stamper and solidified and then the quartz stamper was peeled off from the film base. By this means, the film base which had desired subwavelength structures in the surface and had a thickness of about 0.1 mm was obtained.

Next, an optical disk in which the thickness of a second substrate was 0.5 mm and was compliant with the DVD-DL standard was prepared. Next, the film base was laminated to the reading surface of this second substrate across an adhesive. By this means, an optical disk which had desired subwavelength structures in a reading surface and which was compliant with the DVD-DL standard was obtained.

A subwavelength structure forming method used in this Example 8 is not limited to DVD-DL, and is applicable to optical disks of various standards such as a CD and a BD.

Next, sizes and shapes of surface antireflection moth-eye patterns of optical disks compliant with BD, DVD and CD standards were studied using a RCWA simulation method.

The following two conditions were preconditions upon this study.

(1) A setting can be made under current molding conditions or can be changed under conditions which are simple to such a degree that manufacturing is not significantly influenced.
(2) A current signal pattern exposure device can simply form a pattern.

Hence, a pattern height was 200 nm or less regarding a pit height 150 nm of a CD of the highest pattern height as a target value, a pattern pitch was 200 nm or more based on resolving power and a ratio (aspect ratio) of the height to the pattern pitch was 1 or less from a view point of easiness of molding, and a circular truncated conical shape which had an adequate inclination was a target.

Further, the reflectivity which is an indicator of the antireflection effect was 0.2% or less as a level at which an effect worked with respect to n = about 1.5 with a substrate such as polycarbonate, acryl or glass in mind, and 0.1% or less as a target of a desirable level.

(Test Example 1)

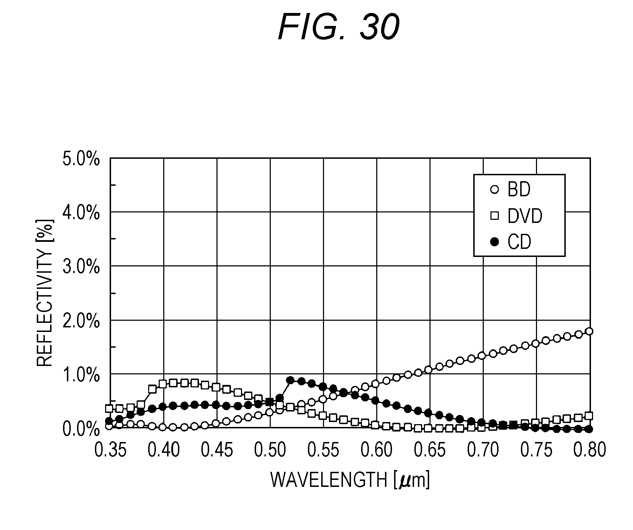

The reflectivity in case that a plurality of structures employing the following configurations was formed in a reading surface of an optical disk compliant with the BD standard was calculated using the RCWA simulation method. The result is illustrated in Fig. 30.

Pattern pitch: 300 nm
Pattern height: 120 nm
Flat portion diameter of pattern upper portion: 90 nm
Pattern alignment: Hexagonal lattice pattern
Pattern shape: Circular truncated conical shape

In the present example, the flat portion diameter means the diameter of the flat portion.

The above simulation result shows that the reflectivity with respect to 405 nm of a BD reading pickup wavelength is almost 0%. Further, when the reflectivity was checked at 45 degrees of an

incident angle taking 0.85 of a pickup lens NA value into account, the reflectivity was about 0.5% and provided an antireflection effect although the reflectivity deteriorated compared to vertical incidence.

(Test Example 2)

The reflectivity in case that a plurality of structures employing the following configurations was formed in a reading surface of an optical disk compliant with the DVD standard was calculated using the RCWA simulation method. The result is illustrated in Fig. 30.

Pattern pitch: 300 nm,
Pattern height: 180 nm,

Flat portion diameter of pattern upper portion: 150 nm
Pattern alignment: Hexagonal lattice pattern
Pattern shape: Circular truncated conical shape
The above simulation result shows that the reflectivity with respect to 650 nm of a DVD reading pickup wavelength is almost 0%.

(Test Example 3)

The reflectivity in case that a plurality of structures employing the following configurations was formed in a reading surface of an optical disk compliant with the CD standard was calculated using the RCWA simulation method. The result is illustrated in Fig. 30.
Pattern pitch: 300 nm
Pattern height: 215 nm
Flat portion diameter of pattern upper portion: 150 nm
Pattern alignment: Hexagonal lattice pattern
Pattern shape: Circular truncated conical shape
The above simulation result shows that the reflectivity with respect to 780 nm of a CD reading pickup wavelength is almost 0%.

(Test Example 4)

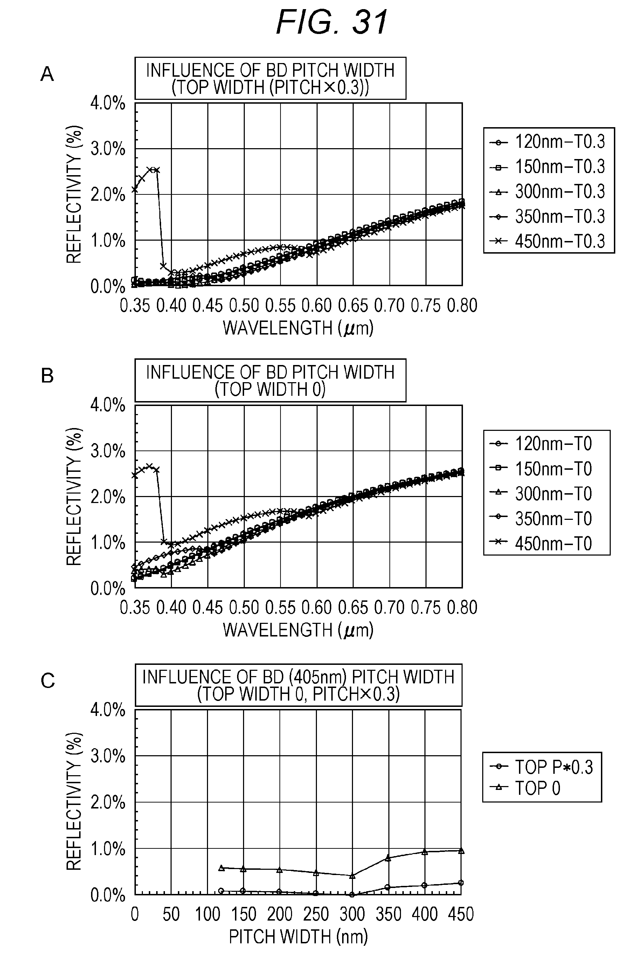

The reflectivity in case that a plurality of structures employing the following configurations was formed in a reading surface of an optical disk compliant with the BD standard was calculated using the RCWA simulation method. The results are illustrated in Figs. 31A to 31C.
Pattern pitch: Change in range of 120 to 450 nm
Pattern height: 120 nm
Flat portion diameter of pattern upper portion: 0.3 folds (circular truncated conical shape) of setting pitch and 0 (conical shape)
Pattern alignment: Hexagonal lattice pattern
Pattern shape: Circular truncated conical shape, conical shape
Fig. 31A illustrates a graph in case that the flat portion diameter of a pattern upper portion is 0.3 folds (circular truncated conical shape) of a pitch. Fig. 31B illustrates a graph in case that the flat portion diameter of a pattern upper portion is 0 fold (conical shape) of a pitch. Fig. 31C illustrates a graph in case that the reflectivity at 405 nm of an OP (Optical Pickup) wavelength is associated with a pattern pitch.
As is clear from Fig. 31C, in case of 405 nm of the target OP wavelength, under the setting conditions, the reflectivity is lower when the flat portion diameter of the pattern upper portion is 0.3 folds (elliptic conical shape) of a pitch than when the flat portion diameter is 0 fold (conical shape) of a pitch. However, even when the flat portion diameter of the pattern upper portion is 0 fold of the pitch, the reflectivity is 1% or less in the range of 120 to 450 nm of the pitch, so that it is possible to provide an antireflection effect.
Further, as are clear from Figs. 31A and 31B, in both cases, when the pitch is 450 nm, a rapid rise in the reflectivity occurs near about 390 nm of the wavelength or less. This is a value obtained by multiplying 450 nm of the pitch with $\sqrt{3}/2$ and corresponds to a dimension value which is the nearest effective diffraction grating interval in case of the hexagonal lattice arrangement. This is a value of a height of a triangle in case that a pattern is arranged at each top of a regular triangle (the length of one side is a pitch dimension).
In addition, in case of a square lattice arrangement, the pitch dimension itself is the nearest effective diffraction grating interval and is 450 nm.
Although a pattern density of a hexagonal lattice arrangement is higher and more advantageous than that of the square lattice and therefore the hexagonal lattice will be mainly described, in case of 450 nm of the pitch, the reflectivity rises due to an influence of diffraction when the wavelength is 390 nm or less, and therefore it shows that the antireflection effect cannot be obtained.
According to this, when the OP wavelength of a BD is 405 nm, the pitch dimension which causes an influence of a rise in the reflectivity resulting from this diffraction grating is 468 nm obtained by dividing 405 nm by $\sqrt{3}/2$ and, when the pitch dimension is about 470 nm or less, the antireflection effect can be obtained at 405 nm of the OP wavelength.
Thus, in case of the optical disk compliant with the BD standard, the pattern pitch is preferably set to a range equal to or less than about 470 nm to obtain the antireflection effect.

(Test Example 5)

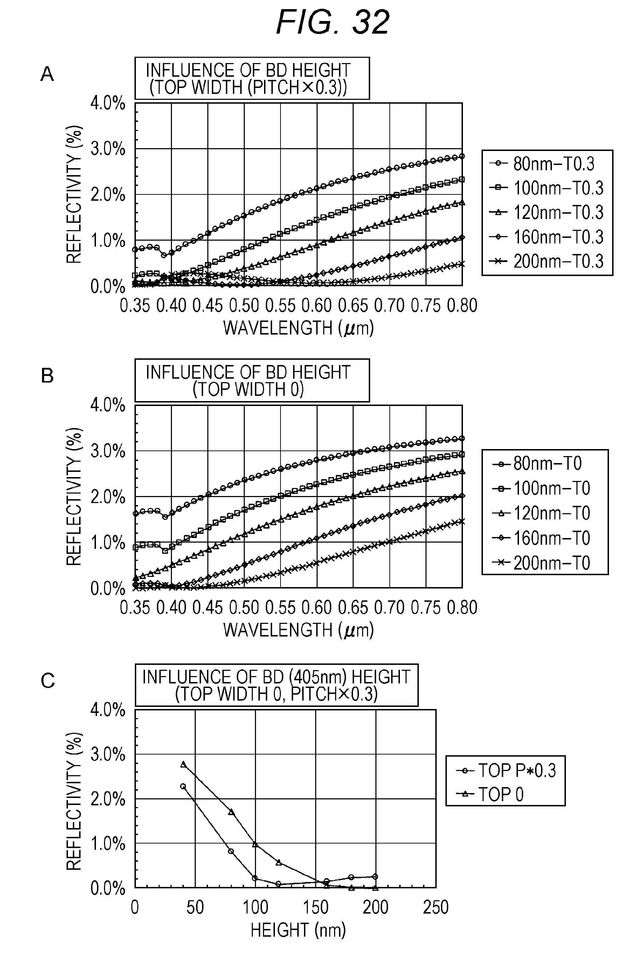

The reflectivity in case that a plurality of structures employing the following configurations was formed in a reading surface of an optical disk compliant with the BD standard was calculated using the RCWA simulation method. The results are illustrated in Figs. 32A to 32C.

Pattern pitch: 300 nm

Pattern height: Change in range of 40 to 200 nm

Flat portion diameter of pattern upper portion: 0.3 folds (circular truncated conical shape) of setting pitch and 0 (conical shape)

Pattern alignment: Hexagonal lattice pattern

Pattern shape: Circular truncated conical shape, conical shape

Fig. 32A illustrates a graph in case that the flat portion diameter of a pattern upper portion is 0.3 folds (circular truncated conical shape) of a pitch. Fig. 32B illustrates a graph in case that the flat portion diameter of a pattern upper portion is 0 fold (conical shape) of a pitch. Fig. 32C illustrates a graph in case that the reflectivity at 405 nm of an OP wavelength is associated with a pattern height.

As is clear from Fig. 32C, in case of 405 nm of the target OP wavelength, when the height is 150 nm or less, the reflectivity is lower when the flat portion diameter of the pattern upper portion is 0.3 folds (elliptic conical shape) of a pitch than when the flat portion diameter is 0 fold (conical shape) of a pitch. However, even when the flat portion diameter of the pattern upper portion is 0 fold of the pitch, the reflectivity is 2% or less in the range of 80 to 200 nm of the height, so that it is possible to provide an antireflection effect.

Further, when the flat portion diameter of the pattern upper portion is 0 fold (conical shape) of the pitch, as the height becomes higher, the reflectivity becomes lower and the effect becomes higher, and the height equal to or more than 160 nm is required to obtain the reflectivity close to 0%. With a broad view, in a range of 80 to 200 nm of the height, the antireflection effect can be obtained.

Although a lower height matches the object of the present invention, the antireflection effect is more advantageous when the height is higher, and therefore two folds of about 100 nm of the BD pit height is a target of an upper limit value.

(Test Example 6)

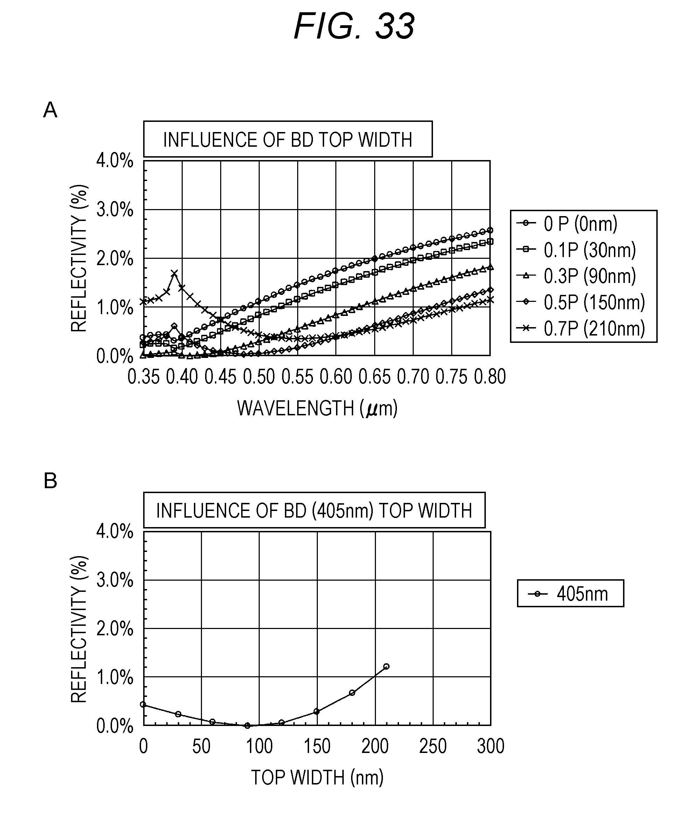

The reflectivity in case that a plurality of structures employing the following configurations was formed in a reading surface of an optical disk compliant with the BD standard was calculated using the RCWA simulation method. The results are illustrated in Figs. 33A and 33B.

Pattern pitch: 300 nm

Pattern height: 120 nm

Flat portion diameter of turn upper portion Change from 0 to 0.7 folds of pitch

Pattern alignment: Hexagonal lattice pattern

Pattern shape: Circular truncated conical shape, conical shape

Fig. 33A illustrates a graph in case that the flat portion diameter of a pattern upper portion is changed from 0 to 0.7 folds of a pitch. Fig. 33B illustrates a graph in case that the reflectivity at 405 nm of an OP wavelength is associated with a flat portion diameter of the pattern upper portion.

As is clear from Fig. 33B, when the target OP wavelength is 405 nm, if the flat portion diameter of the pattern upper portion is close to 0.3 folds (90 nm) of the pitch, and the reflectivity becomes the lowest. In addition, when the flat portion diameter of the pattern upper portion is 0 fold of the pitch which is the narrowest, the reflectivity is about 0.5% and, when the flat portion diameter of the pattern upper portion is 0.7 folds (210 nm) of the pitch which is the widest, the reflectivity is about 1.2%, so that it is possible to obtain an antireflection effect in this range.

(Test Example 7)

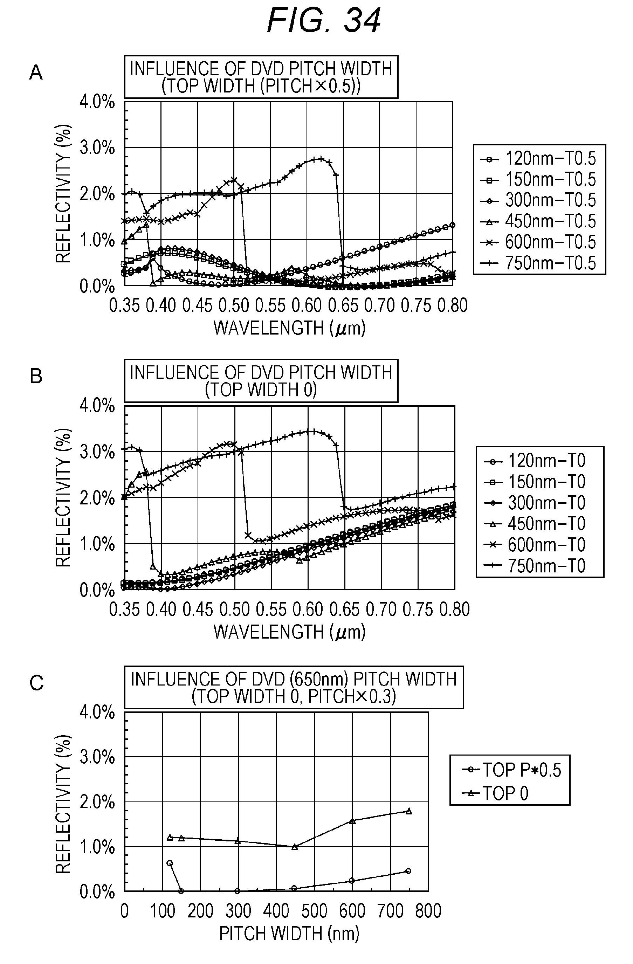

The reflectivity in case that a plurality of structures employing the following configurations was formed in a reading surface of an optical disk compliant with the DVD standard was calculated using the RCWA simulation method. The results are illustrated in Figs. 34A to 34C.

Pattern pitch: Change in range of 120 to 750 nm

Pattern height: 180 nm

Flat portion diameter of pattern upper portion: 0.5 folds (circular truncated conical shape) of setting pitch and 0 (conical shape)

Pattern alignment: Hexagonal lattice pattern

Pattern shape: Circular truncated conical shape, conical shape

Fig. 34A illustrates a graph in case that the flat portion diameter of a pattern upper portion is 0.5 folds (circular truncated conical shape) of a pitch. Fig. 34B illustrates a graph in case that the flat portion diameter of a pattern upper portion is 0 fold (conical shape) of a pitch. Fig. 34C illustrates a graph in case that the reflectivity at 650 nm of an OP wavelength is associated with a pattern pitch.

As is clear from Fig. 34C, in case of 650 nm of the target OP wavelength, under the setting conditions, the reflectivity is lower when the flat portion diameter of the pattern upper portion is 0.5 folds (elliptic conical shape) of a pitch than when the flat portion diameter is 0 fold (conical shape) of a pitch. When the flat portion diameter of the upper portion is 0.5 folds of the pitch, the reflectivity is almost 0% in the range of 150 to 450 nm of the pitch dimension. However, even when the flat portion diameter of the pattern upper portion is 0 fold of the pitch, the reflectivity is 2% or less in the range of 120 to 750 nm of the pitch, so that it is possible to provide an antireflection effect.

Further, similar to the optical disk compliant with the BD standard, as are clear from Figs. 34A and 34B, when the pitch is increased in both cases, there is a region in which the reflectivity rapidly changes due to an influence of diffraction.

When the pitch is 750 nm in the hexagonal lattice arrangement, about 650 nm which is a value obtained by multiplying 750 nm with √3/2 corresponds to a dimension value which is the nearest effective diffraction grating interval, and then a rapid rise in the reflectivity is observed in a wavelength region having this dimension or less.

Meanwhile, 650 nm is the OP wavelength of a DVD as-is and, in case of the DVD, it is possible to obtain the antireflection effect at 750 nm or less of the pitch dimension. In addition, in case of a square lattice arrangement, the pitch dimension is the nearest diffraction grating interval, so that, when the pitch dimension is 650 nm or less, it is possible to obtain the antireflection effect.

Thus, in case of the optical disk compliant with the DVD standard, the pattern pitch is preferably set to a range equal to or less than about 750 nm to obtain the antireflection effect.

(Test Example 8)

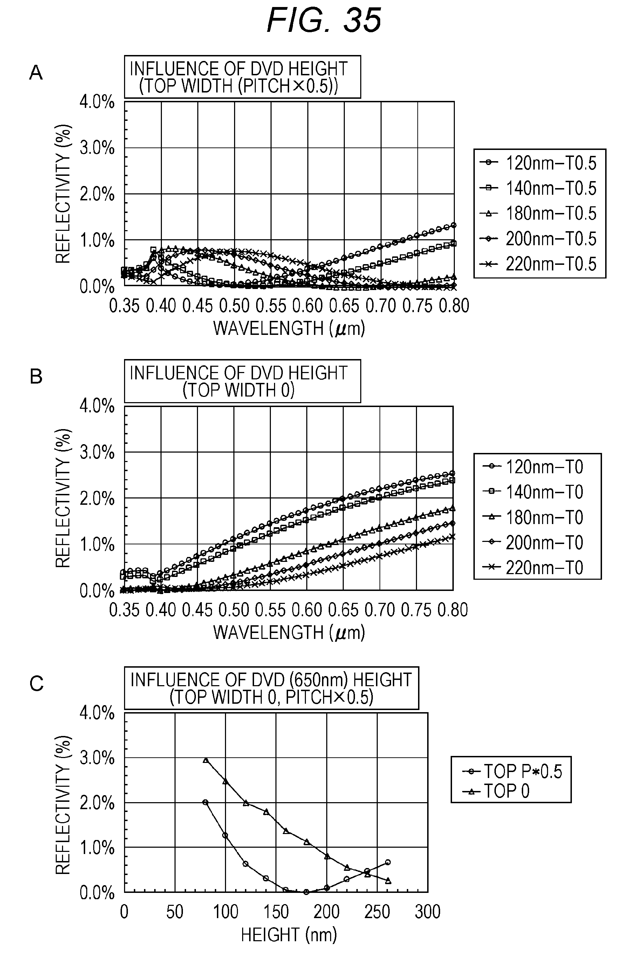

The reflectivity in case that a plurality of structures employing the following configurations was formed in a reading surface of an optical disk compliant with the DVD standard was calculated using the RCWA simulation method. The results are illustrated in Figs. 35A to 35C.

Pattern pitch: 300 nm
Pattern height: Change in range of 80 to 260 nm
Flat portion diameter of pattern upper portion: 0.5 folds (circular truncated conical shape) of setting pitch and 0 (conical shape)
Pattern alignment: Hexagonal lattice pattern
Pattern shape: Circular truncated conical shape, conical shape

Fig. 35A illustrates a graph in case that the flat portion diameter of a pattern upper portion is 0.5 folds (circular truncated conical shape) of a pitch. Fig. 35B illustrates a graph in case that the flat portion diameter of a pattern upper portion is 0 fold (conical shape) of a pitch. Fig. 35C illustrates a graph in case that the reflectivity at 650 nm of an OP wavelength is associated with a pattern height.

As is clear from Fig. 35C, in case of 650 nm of the target OP wavelength, the reflectivity is lower when the flat portion diameter of the pattern upper portion is 0.5 folds (elliptic conical shape) of a pitch in the region having 80 to 230 nm of the height than when the flat portion diameter is 0 fold (conical shape) of a pitch. When the flat portion diameter of the pattern upper portion is 0.5 folds of the pitch, the reflectivity is 2% or less when the height is 80 nm or more, the reflectivity is 1% or less when the height is 110 nm or less and the reflectivity is almost 0% when the height is around between 160 and 200 nm.

Further, when the flat portion diameter of the pattern upper portion is 0 fold (conical shape) of the pitch, as the height becomes higher, the reflectivity becomes lower and the antireflection effect becomes higher, and the height equal to or more than 260 nm is required to obtain the reflectivity close to 0%.

With a broad view, in a range of 80 to 260 nm of the height, the antireflection effect can be obtained.

Although a lower height matches the object of the present invention, the antireflection effect is more advantageous when the height is higher, and therefore two folds of about 130 nm of the DVD pit height is a target of an upper limit value.

(Test Example 9)

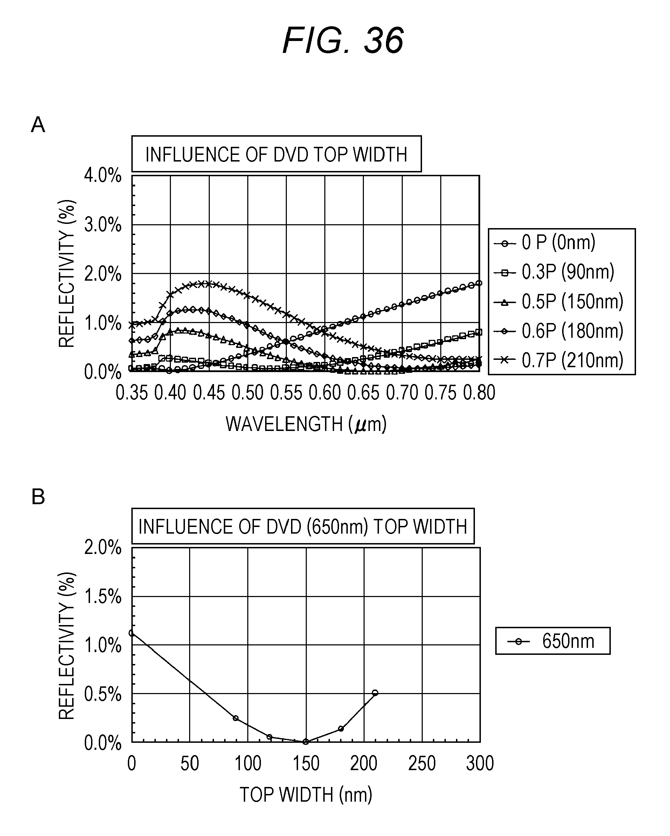

The reflectivity in case that a plurality of structures employing the following configurations was formed in a reading surface of an optical disk compliant with the DVD standard was calculated using the RCWA simulation method. The results are illustrated in Figs. 36A to 36C.

Pattern pitch: 300 nm

Pattern height: 180 nm
Flat portion diameter of pattern upper portion: Change from 0 to 0.7 folds of pitch
Pattern alignment: Hexagonal lattice pattern
Pattern shape: Circular truncated conical shape, conical shape

Fig. 36A illustrates a graph in case that the flat portion diameter of a pattern upper portion is changed from 0 to 0.7 folds of a pitch. Fig. 36B illustrates a graph in case that the reflectivity at 650 nm of an OP wavelength is associated with a flat portion diameter of the pattern upper portion.

As is clear from Fig. 36B, when the target OP wavelength is 650 nm, if the flat portion diameter of the pattern upper portion is close to 0.5 folds (150 nm) of the pitch, and the reflectivity becomes the lowest. In addition, when the flat portion diameter of the pattern upper portion is 0 fold of the pitch which is the narrowest, the reflectivity is about 1.1% and, when the flat portion diameter of the pattern upper portion is 0.7 folds (210 nm) of the pitch which is the widest, the reflectivity is about 0.5%, so that it is possible to obtain an antireflection effect in this range.

(Test Example 10)

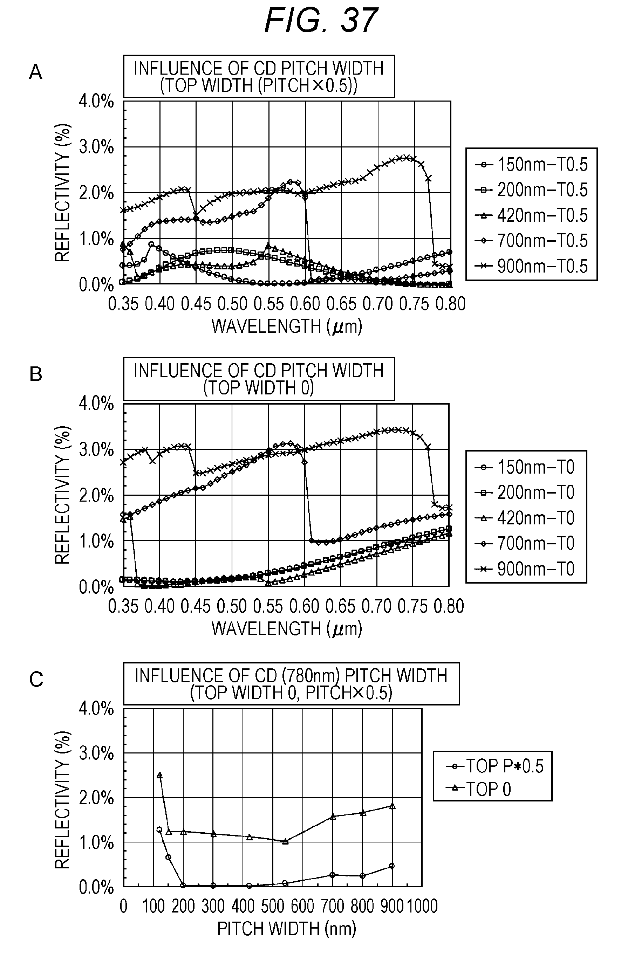

The reflectivity in case that a plurality of structures employing the following configurations was formed in a reading surface of an optical disk compliant with the CD standard was calculated using the RCWA simulation method. The results are illustrated in Figs. 37A to 37C.

Pattern pitch: Change in range of 120 to 900 nm
Pattern height: 215 nm
Flat portion diameter of pattern upper portion: 0.5 folds (circular truncated conical shape) of setting pitch and 0 (conical shape)
Pattern alignment: Hexagonal lattice pattern
Pattern shape: Circular truncated conical shape, conical shape

Fig. 37A illustrates a graph in case that the flat portion diameter of a pattern upper portion is 0.5 folds (circular truncated conical shape) of a pitch. Fig. 37 illustrates a graph in case that the flat portion diameter of a pattern upper portion is 0 fold (conical shape) of a pitch. Fig. 37C illustrates a graph in case that the reflectivity at 780 nm of an OP wavelength is associated with a pattern pitch.

As is clear from Fig. 37C, in case of 780 nm of the target OP wavelength, under the setting conditions, the reflectivity is lower when the flat portion diameter of the pattern upper portion is 0.5 folds (circular truncated conical shape) of a pitch than when the flat portion diameter is 0 fold (conical shape) of a pitch. When the flat portion diameter of the upper portion is 0.5 folds of the pitch, the reflectivity is almost 0% in the range of 200 to 550 nm of the pitch dimension.

Even when the flat portion diameter of the pattern upper portion is 0 fold of the pitch, the reflectivity is 2% or less in the range of 150 to 900 nm of the pitch, so that it is possible to provide an antireflection effect.

Further, similar to the above mentioned optical disks compliant with the BD and DVD standards, as are clear from Figs. 37A and 37B, when the pitch is increased in both cases, there is a region in which the reflectivity rapidly changes due to an influence of diffraction.

When the pitch is 900 nm in the hexagonal lattice arrangement, about 780 nm which is a value obtained by multiplying 900 nm with √3/2 corresponds to a dimension value which is the nearest effective diffraction grating interval, and then a rapid rise in the reflectivity is observed in a wavelength region having this dimension or less.

Meanwhile, 780 nm is the OP wavelength of a CD and, in case of the CD, it is possible to obtain the antireflection effect at 900 nm or less of the pitch dimension. In addition, in case of a square lattice arrangement, the pitch dimension is the nearest diffraction grating interval, so that, in a region in which the pitch is 780 nm or less, it is possible to obtain the antireflection effect.

Thus, in case of the optical disk compliant with the CD standard, the pattern pitch is preferably set to a range equal to or less than about 900 nm to obtain the antireflection effect.

(Test Example 11)

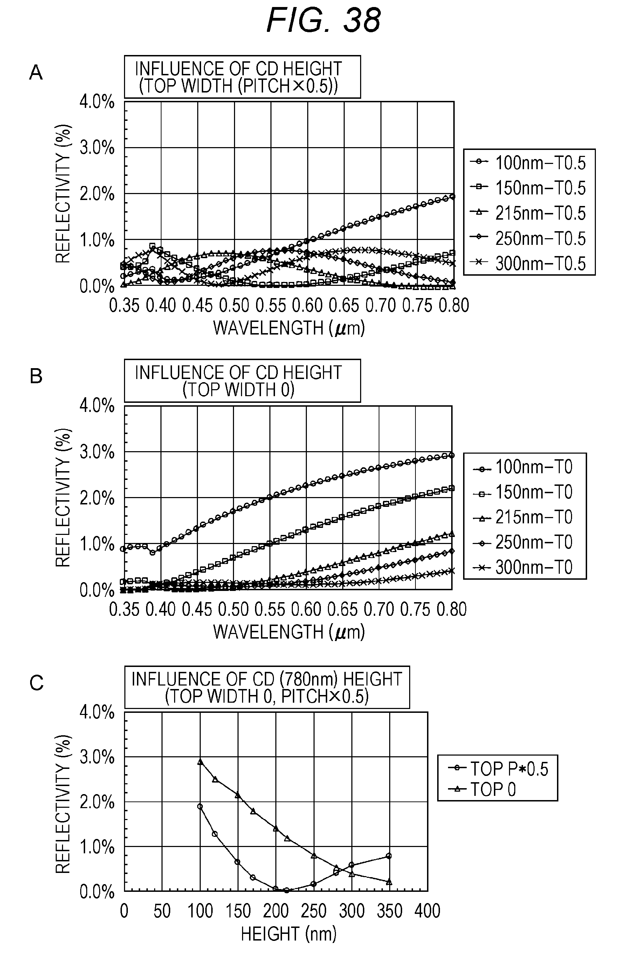

The reflectivity in case that a plurality of structures employing the following configurations was formed in a reading surface of an optical disk compliant with the CD standard was calculated using the RCWA simulation method. The results are illustrated in Figs. 38A to 38C.

Pattern pitch: 300 nm
Pattern height: Change in range of 100 to 350 nm
Flat portion diameter of pattern upper portion: 0.5 folds (circular truncated conical shape) of setting pitch and 0 (conical shape)
Pattern alignment: Hexagonal lattice pattern
Pattern shape: Circular truncated conical shape, conical shape

Fig. 38A illustrates a graph in case that the flat portion diameter of a pattern upper portion is 0.5 folds (circular truncated conical shape) of a pitch. Fig. 38B illustrates a graph in case that the flat portion diameter of a pattern upper portion is 0 fold (conical shape) of a pitch. Fig. 38C illustrates a graph in case that the reflectivity at 780 nm of an OP wavelength is associated with a pattern height.

As is clear from Fig. 38C, in case of 780 nm of the target OP wavelength, the reflectivity is lower when the flat portion diameter of the pattern upper portion in the region of 100 to 280 nm of the height is 0.5 folds (circular truncated conical shape) of a pitch than when the flat portion diameter is 0 fold (conical shape) of a pitch. When the flat portion diameter of the pattern upper portion is 0.5 folds of a pitch, the reflectivity is 2% or less when the height is 100 nm or more, the reflectivity is 1% or less when the height is 130 nm or more and the reflectivity is almost 0% when the height is around between 200 and 220 nm.

Further, when the flat portion diameter of the pattern upper portion is 0 fold (conical shape) of the pitch, as the height pattern becomes higher, the reflectivity becomes lower and the antireflection effect becomes higher, but the height equal to or more than 350 nm is required to obtain the reflectivity close to 0%. With a broad view, in a range of 100 to 300 nm of the height, the antireflection effect can be obtained.

Although a lower height matches the object of the present invention, the antireflection effect is more advantageous when the height is higher, and therefore two folds of about 150 nm of the CD pit height is a target of an upper limit value.

(Test Example 12)

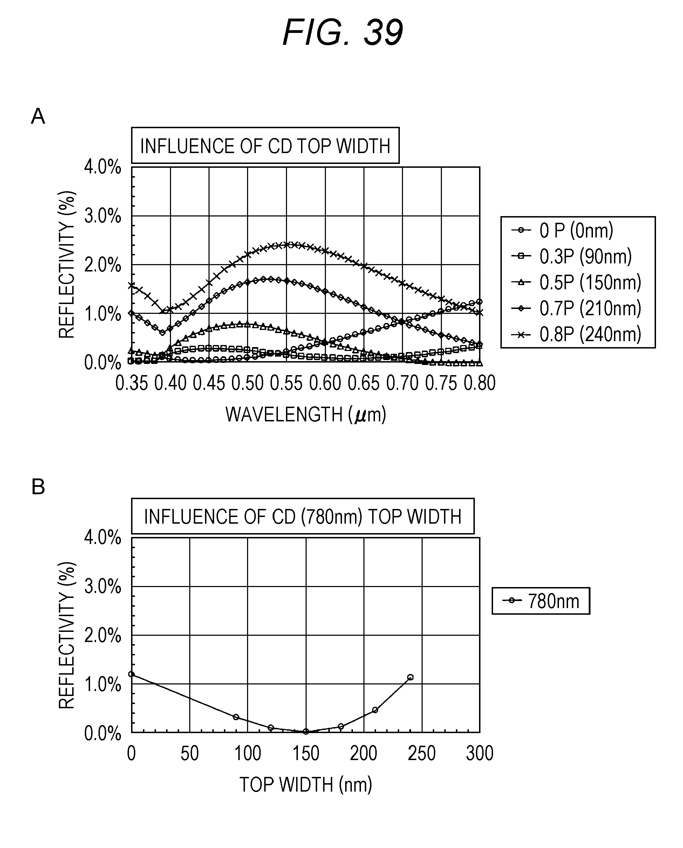

The reflectivity in case that a plurality of structures employing the following configurations was formed in a reading surface of an optical disk compliant with the CD standard was calculated using the RCWA simulation method. The results are illustrated in Figs. 39A and 39B.

Pattern pitch: 300 nm
Pattern height: 215 nm
Flat portion diameter of pattern upper portion: Change from 0 to 0.8 folds of pitch
Pattern alignment: Hexagonal lattice pattern
Pattern shape: Circular truncated conical shape, conical shape

Fig. 39A illustrates a graph in case that the flat portion diameter of a pattern upper portion is changed from 0 to 0.8 folds of a pitch. Fig. 39B illustrates a graph in case that the reflectivity at 780 nm of an OP wavelength is associated with a flat portion diameter of the pattern upper portion.

As is clear from Fig. 39B, when the target OP wavelength is 780 nm, if the flat portion diameter of the pattern upper portion is close to 0.5 folds (150 nm) of the pitch, and the reflectivity becomes the lowest. In addition, when the flat portion diameter of the pattern upper portion is 0 fold of the pitch which is the narrowest, the reflectivity is about 1.2% and, when the flat portion diameter of the pattern upper portion is 0.8 folds (240 nm) of the pitch which is the widest, the reflectivity is about 1.2%, so that it is possible to obtain an antireflection effect in this range.

(Test Example 13)

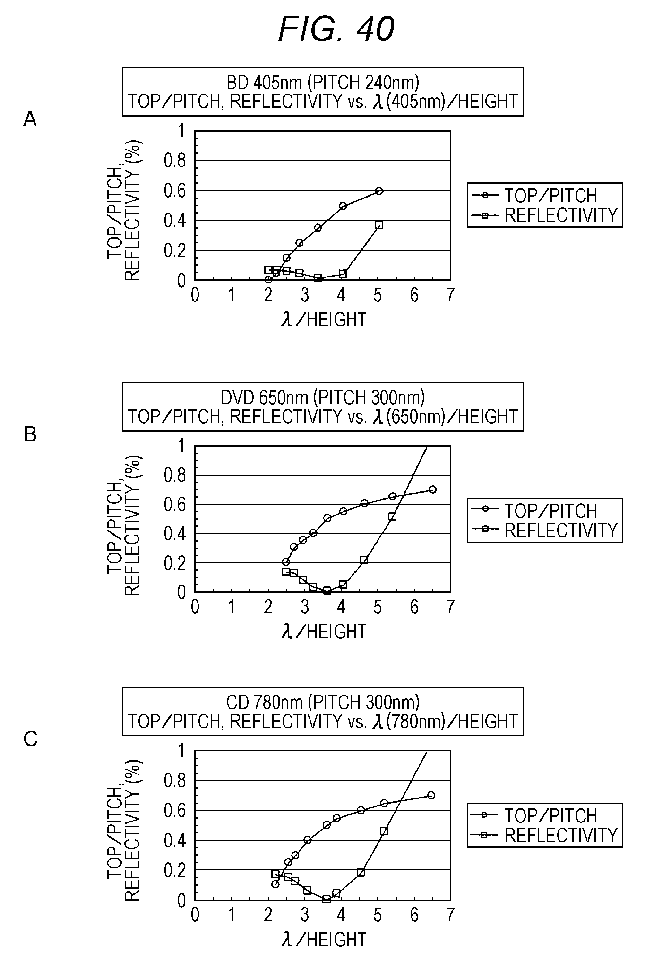

The reflectivity in case that a plurality of structures employing the following configurations was formed in a reading surface of an optical disk compliant with the BD standard was calculated using the RCWA simulation method. The result is illustrated in Fig. 40A.

Pattern pitch: 240 nm
Pattern height: Change in range of 80 to 200 nm
Pattern alignment: Hexagonal lattice pattern
Pattern shape: Circular truncated conical shape

(Test Example 14)

The reflectivity in case that a plurality of structures employing the following configurations was formed in a reading surface of an optical disk compliant with the DVD standard was calculated using the RCWA simulation method. The result is illustrated in Fig. 40B.

Pattern pitch: 300 nm
Pattern height: Change in range of 100 to 260 nm
Pattern alignment: Hexagonal lattice pattern
Pattern shape: Circular truncated conical shape

(Test Example 15)

The reflectivity in case that a plurality of structures employing the following configurations was formed in a reading surface of an optical disk compliant with the CD standard was calculated using the RCWA simulation method. The result is illustrated in Fig. 40C.

Pattern pitch: 300 nm

Pattern height: Change in range of 120 to 350 nm

Pattern alignment: Hexagonal lattice pattern

Pattern shape: Circular truncated conical shape

In Figs. 40A to 40C, the horizontal axis indicates the ratio (OP wavelength/height) of an OP wavelength (BD 405 nm, DVD 650 nm and CD 780 nm) to a structure height. Further, the vertical axis indicates a ratio (flat portion diameter of upper portion/pitch) which is the lowest reflectivity at each structure height, and the lowest reflectivity (%). In addition, in an optical disk compliant with the BD standard, although, when a pattern pitch is 300 nm like the optical disks compliant with the CD standard and the DVD standard, the influence is a little, the pattern pitch is influenced partially by interference. Therefore, the pattern pitch is set to 240 nm at which no influence is caused.

The following is clear from Figs. 40A to 40C.

In case of any optical disk of the BD, DVD and CD standard, when the ratio (OP wavelength/height) (horizontal axis) is near about 3.5, a minimum reflectivity which is almost 0% is obtained. Even when the ratio is higher than the above value (that is, even when the structure height is lower) or even when the ratio is lower (that is, even when the structure height is higher), the reflectivity tends to become high.

To obtain the minimum reflectivity at which the reflectivity is almost 0%, the ratio (OP wavelength/height) is set to about 3.5, and, in case of an optical disk compliant with the BD standard, the ratio (flat portion diameter of upper portion/pitch) is preferably set to 0.3 to 0.4 and, in case of an optical disk compliant with the DVD or CD standard, the ratio is preferably set to about 0.5.

To obtain a good antireflection property equal to or less than 1% of the reflectivity, the ratio (OP wavelength/ height) is preferably set to about 2 to 6 and the ratio (flat portion diameter of upper portion/pitch) is preferably set to a range of about 0 to 0.7 commonly between the optical disks compliant with the BD, DVD and CD.

Although the embodiments of the present invention have been specifically described above, the present invention is by no means limited to the above embodiments, and can be variously modified based on a technical idea of the present invention.

For example, configurations, methods, shapes, materials and numerical values in the above embodiments are only exemplary, and different configurations, methods, shapes, materials and numerical values may be used if necessary.

Further, each configuration of the above embodiments can be combined with one another as long as the combination does not deviate from the spirit of the present invention.

Furthermore, the present invention is not limited to the optical information recording media according to the above embodiments, and is applicable to an optical information recording medium which has a reading surface on which light for recording or playing back an information signal is radiated. For example, the present invention is applicable to a next-generation information recording medium such as a volume information recording medium (volume hologram).

Further, although cases have been described with the above embodiments as examples where a plurality of structures is aligned regularly or cyclically, a plurality of structures may be aligned at random.

Furthermore, although cases have been described with the above embodiments as examples where a plurality of structures has the same size, sizes of a plurality of structures may be changed at random. Still further, the sizes of a plurality of structures may be changed at random, and a plurality of structures is further arranged at random.

Moreover, although cases have been described with the above embodiments as examples where the present invention is applied to an optical information recording medium which has one or two information signal layer, the total number of information signal layers is not limited to this, and the present invention is applicable to an optical information recording medium which has one, two or more information signal layers.

REFERENCE SIGNS LIST

1       Substrate
1a      First compact
1b      Second compact
2       Information signal layer
3       Protective layer
11      Structures

12    Convex-concave portion
13    Resin material
14    Laminating layer
41    First substrate
42    Second substrate
43    First information signal layer
44    Intermediate layer
45    Second information signal layer
51    First substrate
52    First information signal layer
53    Second substrate
54    Second information signal layer
61    Substrate
62    Protective layer

**Claims**

1.  An optical information recording medium comprising:

    a substrate;
    one, two or more information signal layer which is formed on the substrate; and
    a protective layer which is formed on the one, two or more information signal layer, wherein
    a surface of the protective layer is a reading surface on which light for recording or playing back an information
    signal in the information signal layer is radiated, and
    in the reading surface, a plurality of subwavelength structures is formed.

2.  The optical information recording medium according to claim 1, wherein
    an arrangement pitch of the subwavelength structures is 470 nm or less, and
    a height of the subwavelength structures is 80 nm or more and 200 nm or less.

3.  An optical information recording medium comprising:

    a first substrate;
    one, two or more information signal layer which is formed on the first substrate; and
    a second substrate which is formed on the one, two or more information signal layer, wherein
    a surface of the second substrate is a reading surface on which light for recording or playing back an information
    signal in the information signal layer is radiated, and
    in the reading surface, a plurality of subwavelength structures is formed.

4.  The optical information recording medium according to claim 3, wherein
    an arrangement pitch of the subwavelength structures is 750 nm or less, and
    a height of the subwavelength structures is 80 nm or more and 240 nm or less.

5.  An optical information recording medium comprising:

    a substrate;
    one, two or more information signal layer which is formed on the substrate; and
    a protective layer which is formed on the one, two or more information signal layer, wherein
    a surface of the substrate is a reading surface on which light for recording or playing back an information signal
    in the information signal layer is radiated, and
    in the reading surface, a plurality of subwavelength structures is formed.

6.  The optical information recording medium according to claim 5, wherein
    an arrangement pitch of the subwavelength structures is 900 nm or less, and
    a height of the subwavelength structures is 100 nm or more and 300 nm or less.

7.  The optical information recording medium according to any one of claims 1 to 6, wherein

the plurality of subwavelength structures is arranged to form a plurality of columns of tracks, and
the tracks have concentric shapes, spiral shapes or linear shapes.

8. The optical information recording medium according to claim 7, wherein the plurality of subwavelength structures forms a hexagonal lattice pattern, a semi-hexagonal lattice pattern, a square lattice pattern or a semi-square lattice pattern.

9. The optical information recording medium according to claim 7, wherein the tracks are wobbling.

10. The optical information recording medium according to claim 1, 3 or 5, wherein a ratio ($\lambda$/H) of a wavelength $\lambda$ of the light for recording or playing back the information signal to a height H of the subwavelength structures is 2 or more and 6 or less.

11. The optical information recording medium according to claim 1, 3 or 5, wherein a ratio (R/P) of a flat portion diameter R of an upper portion of the subwavelength structures to an arrangement pitch P of the subwavelength structures is 0 or more and 0.7 or less.

12. An optical information recording medium comprising: a reading surface on which light for recording or playing back an information signal is radiated,
wherein, in the reading surface, a plurality of subwavelength structures is formed.

13. A method of manufacturing an optical information recording medium comprising: transferring a shape of a reading surface forming master to a resin material, and forming a substrate or a protective layer on a surface of which a plurality of subwavelength structures is formed,
wherein a surface of the substrate or the protective layer is a reading surface on which light for recording or playing back an information signal is radiated.

# FIG. 1

# FIG. 2

FIG. 3

# FIG. 4

A

B

# FIG. 5

# *FIG. 6*

# FIG. 7

A

B

## FIG. 8

EP 2 672 482 A1

# FIG. 9

# FIG. 10

A — 201

B — 221

C — 201
— 13
— 221

D — 11
— 1
— 12

E — 11
— 1
— 2

F — 1
— 2
— 3

## FIG. 11

A — 201

B — 201 / 13

C — 11 / 1a

D — 221

E — 13 / 221

F — 1b / 12

G — 1a / 14 / 1b / 12 (1)

H — 1a / 14 / 1b / 2 / 12 (1)

I — 1a / 14 / 1b / 2 / 3 (1)

# FIG. 12

# FIG. 13

A — 201

B — 221

C — 201 / 13 / 221

D — 11 / 42 / 12

E — 42 / 2

F — 231

G — 231 / 13

H — 41

I — 42 / 2 / 14 / 41

# FIG. 14

EP 2 672 482 A1

# FIG. 15

A — 201

B — 241

C — 201 / 13 / 241

D — 11 / 42 / 12

E — 42 / 45

F — 242

G — 242 / 13

H — 12 / 41

I — 43 / 41

J — 42 / 45 / 44 / 43 / 41

49

FIG. 16

# FIG. 17

A — 201

B — 251

C — 201 / 13 / 251

D — 11 / 51 / 12

E — 51 / 52

F — 252

G — 13 / 252

H — 53 / 12

I — 53 / 54 / 3

J — 51 / 52 / 14 / 53 / 54 / 3

# FIG. 18

A ........................ 201

B ........................ 42a
45
44
43
41

C ........................ 201
13
42a
45
44
43
41

D ........................ 11 } 42
42a
45
44
43
41

# FIG. 19

A — 201

B — 201
— 13

C — 15

D
42a
45
44
43
41

E
15 ⎫
14 ⎬ 42
42a ⎭
45
44
43
41

# FIG. 20

# FIG. 21

A ————————————————————— 221

B ————————————————————— 221
  ————————————————————— 13

C ————————————————————— 12
  ————————————————————— 1

D ————————————————————— 2
  ————————————————————— 1

E ————————————————————— 201

F ————————————————————— 201
  ————————————————————— 13
  ————————————————————— 2
  ————————————————————— 1

G ————————————————————— 11
  ————————————————————— 61
  ————————————————————— 2
  ————————————————————— 1

# FIG. 22

A ——221

B ——221
——13

C 12 ——1

D 2 ——1

E ——201

F ——201
——13
——61a

G 11 ——61b
——61a

H 61b }61
61a
14
2
1

*FIG. 23*

A

B

C

D

E

F

## FIG. 24

# FIG. 25

## FIG. 26

EP 2 672 482 A1

# FIG. 27

A

1

11

Y

Z X

B

P2

a4  a5

a3  a7  a6

a2  a1

11

T3

T3

T1

−θ  θ

P1

Y

Z X

EP 2 672 482 A1

# FIG. 28

# FIG. 29

# FIG. 30

# FIG. 31

A — INFLUENCE OF BD PITCH WIDTH (TOP WIDTH (PITCH×0.3))

Legend: 120nm−T0.3, 150nm−T0.3, 300nm−T0.3, 350nm−T0.3, 450nm−T0.3

B — INFLUENCE OF BD PITCH WIDTH (TOP WIDTH 0)

Legend: 120nm−T0, 150nm−T0, 300nm−T0, 350nm−T0, 450nm−T0

C — INFLUENCE OF BD (405nm) PITCH WIDTH (TOP WIDTH 0, PITCH×0.3)

Legend: TOP P*0.3, TOP 0

## FIG. 32

## FIG. 33

A

INFLUENCE OF BD TOP WIDTH

- ⊖ 0 P (0nm)
- ⊟ 0.1P (30nm)
- △ 0.3P (90nm)
- ◇ 0.5P (150nm)
- ✳ 0.7P (210nm)

B

INFLUENCE OF BD (405nm) TOP WIDTH

- ⊖ 405nm

# FIG. 34

A

**INFLUENCE OF DVD PITCH WIDTH (TOP WIDTH (PITCH×0.5))**

Legend:
- ⊖ 120nm−T0.5
- ⊟ 150nm−T0.5
- ◆ 300nm−T0.5
- △ 450nm−T0.5
- ✕ 600nm−T0.5
- ＋ 750nm−T0.5

Y-axis: REFLECTIVITY (%)
X-axis: WAVELENGTH (μm)

B

**INFLUENCE OF DVD PITCH WIDTH (TOP WIDTH 0)**

Legend:
- ⊖ 120nm−T0
- ⊟ 150nm−T0
- ◆ 300nm−T0
- △ 450nm−T0
- ✳ 600nm−T0
- ＋ 750nm−T0

Y-axis: REFLECTIVITY (%)
X-axis: WAVELENGTH (μm)

C

**INFLUENCE OF DVD (650nm) PITCH WIDTH (TOP WIDTH 0, PITCH×0.3)**

Legend:
- ⊖ TOP P*0.5
- △ TOP 0

Y-axis: REFLECTIVITY (%)
X-axis: PITCH WIDTH (nm)

## FIG. 35

A

INFLUENCE OF DVD HEIGHT
(TOP WIDTH (PITCH×0.5))

Legend:
- 120nm–T0.5
- 140nm–T0.5
- 180nm–T0.5
- 200nm–T0.5
- 220nm–T0.5

B

INFLUENCE OF DVD HEIGHT
(TOP WIDTH 0)

Legend:
- 120nm–T0
- 140nm–T0
- 180nm–T0
- 200nm–T0
- 220nm–T0

C

INFLUENCE OF DVD (650nm) HEIGHT
(TOP WIDTH 0, PITCH×0.5)

Legend:
- TOP P*0.5
- TOP 0

# FIG. 36

A

INFLUENCE OF DVD TOP WIDTH

REFLECTIVITY (%)

4.0%
3.0%
2.0%
1.0%
0.0%

0.35 0.40 0.45 0.50 0.55 0.60 0.65 0.70 0.75 0.80

WAVELENGTH ($\mu$m)

-○- 0 P (0nm)
-□- 0.3P (90nm)
-△- 0.5P (150nm)
-◇- 0.6P (180nm)
-✕- 0.7P (210nm)

B

INFLUENCE OF DVD (650nm) TOP WIDTH

REFLECTIVITY (%)

2.0%
1.5%
1.0%
0.5%
0.0%

0    50   100  150  200  250  300

TOP WIDTH (nm)

-○- 650nm

# FIG. 37

A

**INFLUENCE OF CD PITCH WIDTH (TOP WIDTH (PITCH×0.5))**

- 150nm–T0.5
- 200nm–T0.5
- 420nm–T0.5
- 700nm–T0.5
- 900nm–T0.5

B

**INFLUENCE OF CD PITCH WIDTH (TOP WIDTH 0)**

- 150nm–T0
- 200nm–T0
- 420nm–T0
- 700nm–T0
- 900nm–T0

C

**INFLUENCE OF CD (780nm) PITCH WIDTH (TOP WIDTH 0, PITCH×0.5)**

- TOP P*0.5
- TOP 0

## FIG. 38

A

INFLUENCE OF CD HEIGHT
(TOP WIDTH (PITCH×0.5))

- 100nm-T0.5
- 150nm-T0.5
- 215nm-T0.5
- 250nm-T0.5
- 300nm-T0.5

B

INFLUENCE OF CD HEIGHT
(TOP WIDTH 0)

- 100nm-T0
- 150nm-T0
- 215nm-T0
- 250nm-T0
- 300nm-T0

C

INFLUENCE OF CD (780nm) HEIGHT
(TOP WIDTH 0, PITCH×0.5)

- TOP P*0.5
- TOP 0

# FIG. 39

A

INFLUENCE OF CD TOP WIDTH

- ⊖ 0 P (0nm)
- ⊟ 0.3P (90nm)
- △ 0.5P (150nm)
- ◇ 0.7P (210nm)
- ✳ 0.8P (240nm)

B

INFLUENCE OF CD (780nm) TOP WIDTH

- ⊖ 780nm

# FIG. 40

A

**BD 405nm (PITCH 240nm)**
**TOP/PITCH, REFLECTIVITY vs. $\lambda$(405nm)/HEIGHT**

B

**DVD 650nm (PITCH 300nm)**
**TOP/PITCH, REFLECTIVITY vs. $\lambda$(650nm)/HEIGHT**

C

**CD 780nm (PITCH 300nm)**
**TOP/PITCH, REFLECTIVITY vs. $\lambda$(780nm)/HEIGHT**

<table>
<tr><td colspan="2" align="center">**INTERNATIONAL SEARCH REPORT**</td><td colspan="2">International application No.<br>PCT/JP2012/053033</td></tr>
</table>

A. CLASSIFICATION OF SUBJECT MATTER
*G11B7/24*(2006.01)i, *G02B1/11*(2006.01)i, *G11B7/26*(2006.01)i

According to International Patent Classification (IPC) or to both national classification and IPC

B. FIELDS SEARCHED

Minimum documentation searched (classification system followed by classification symbols)
G11B7/24, G02B1/11, G11B7/26

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 02/27716 A1 (Matsushita Electric Industrial Co., Ltd.),<br>04 April 2002 (04.04.2002),<br>claims 10 to 12; pages 1 to 5; carrying-out modes 1 to 3; fig. 1, 4A, 4B, 6<br>& US 2003/0169671 A1 & AU 9231901 A<br>& CN 1466752 A | 1,3,5,13<br>2,4,6-12 |
| X<br>Y | JP 2004-22157 A (Sanyo Electric Co., Ltd.),<br>22 January 2004 (22.01.2004),<br>paragraphs [0002] to [0050]; fig. 1 to 14<br>(Family: none) | 3,5<br>2,4,6-12 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>15 May, 2012 (15.05.12) | Date of mailing of the international search report<br>29 May, 2012 (29.05.12) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/053033

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2005-258120 A  (Fuji Photo Film Co., Ltd.), 22 September 2005 (22.09.2005), claims 3 to 9; paragraphs [0005] to [0011], [0030] to [0045] (Family: none) | 2,4,6-12 |
| A | JP 2007-515667 A  (Aprilis, Inc.), 14 June 2007 (14.06.2007), entire text; all drawings & US 2005/0105150 A1     & EP 1704562 A & WO 2005/050627 A2     & CA 2545927 A & KR 10-2007-0008521 A | 1-13 |
| A | WO 2010/143503 A1  (Sharp Corp.), 16 December 2010 (16.12.2010), entire text; all drawings (Family: none) | 1-13 |
| A | WO 2009/144970 A1  (Sharp Corp.), 03 December 2009 (03.12.2009), entire text; all drawings & US 2011/0003121 A1     & CN 102016650 A | 1-13 |

Form PCT/ISA/210 (continuation of second sheet) (July 2009)

## REFERENCES CITED IN THE DESCRIPTION

**Patent documents cited in the description**

- JP 6028716 A

- JP 2003208733 A

**Non-patent literature cited in the description**

- CX-PAL, Semiconductor & Component News. Sony Corporation, October 2007, vol. 74